# EUROPÄISCHE PATENTSCHRIFT

(11) **EP 3 286 115 B1**
(45) Veröffentlichungstag und Bekanntmachung des Hinweises auf die Patenterteilung: **27.01.2021**
(21) Anmeldenummer: 16717907.6
(22) Anmeldetag: 20.04.2016
(51) Int. Cl.: B65G 43/10

(54) **INSTALLATIONSVERFAHREN ZUM EINRICHTEN VON FÖRDERVORRICHTUNGEN**
INSTALLATION METHOD FOR SETTING UP CONVEYING DEVICES
PROCÉDÉ D'INSTALLATION POUR RÉGLER DES DISPOSITIFS DE CONVOYAGE

(30) Priorität: 20.04.2015 DE 102015106034
(43) Veröffentlichungstag der Anmeldung: 28.02.2018
(73) Patentinhaber: Interroll Holding AG, 6592 Sant' Antonino (CH)
(72) Erfinder: HENZE, Herbert, 42929 Wermelskirchen (DE)
(74) Vertreter: Eisenführ Speiser
(86) Internationale Anmeldenummer: PCT/EP2016/058719
(87) Internationale Veröffentlichungsnummer: WO 2016/169962

(56) Entgegenhaltungen:
- EP-A1- 2 455 310
- EP-A2- 0 869 089
- WO-A1-99/37563
- WO-A1-2012/113922
- WO-A1-2012/154650
- WO-A1-2014/085429
- WO-A2-02/03153
- DE-A1-102010 037 601
- JP-A- 2003 104 534
- US-A1- 2012 175 223
- US-A1- 2012 175 225
- US-B1- 6 240 335

## Beschreibung

Die Erfindung betrifft ein Installationsverfahren zum Einrichten einer Steuerungseinheit in einer Fördervorrichtung, wobei eine erste Steuerungseinheit ein stromaufwärtsliegendes erstes Fördersegment steuert und eine zweite Steuerungseinheit ein stromabwärtsliegendes zweites Fördersegment steuert. Hierbei umfasst das erste Fördersegment einen ersten Förderantrieb zum Fördern eines Objekts durch das erste Fördersegment und eine erste Sensoreinheit zum Erfassen eines Objekts an einer Position innerhalb des ersten Fördersegments. Zudem sind der erste Förderantrieb und die erste Sensoreinheit signaltechnisch mit der ersten Steuerungseinheit gekoppelt, um den ersten Förderantrieb zu steuern und um ein erstes Sensorsignal von der ersten Sensoreinheit zu empfangen.

Der Aufbau des zweiten Fördersegments ist hinsichtlich der oben genannten Merkmale analog zu dem ersten Fördersegment.

Fördervorrichtungen und Verfahren für deren Betrieb sind grundsätzlich beispielsweise aus EP1656312B1 oder AT13066U1 bekannt. Fördervorrichtungen werden in Förderanlagen eingesetzt, in denen Logistikprozesse voll- und teilautomatisiert ablaufen. Durch Fördervorrichtungen werden beispielsweise Pakete, Paletten, Waren und andere Güter von einem Ausgangsort zu einem Zielort befördert. Ausgangsorte und Zielorte sind in komplexen Förderanlagen mitunter weit voneinander entfernt. Größere Fördervorrichtungen sind daher in eine Vielzahl von Fördersegmenten unterteilt, welche in Reihe hintereinander angeordnet sind und so eine Förderstrecke bilden, die ein Transportgut vom Ausgangsort stromabwärts zum Zielort befördert. Förderstrecken können parallel aufgebaut werden und z. B. durch Zusammenführungsvorrichtungen, Vereinzelungsvorrichtungen, Absenkvorrichtungen oder Hebevorrichtungen miteinander verbunden sein. So ergeben sich komplexe Fördervorrichtungen, die aus einer Vielzahl von Fördersegmenten bestehen. Grundsätzlich kann dabei jedes Fördersegment eine separate, in einem Gehäuse angeordnete Steuerungseinheit aufweisen oder es können die Steuerungseinheiten für mehrere benachbarte Fördersegmente in einem gemeinsamen Steuerungsmodul zusammengefasst sein.

Häufig wird ein Fördersegment zudem mit einer Sensoreinheit ausgestattet, die in Form eines Belegtsignals eine Information darüber bereitstellt, ob ein Fördersegment durch ein Transportgut belegt ist oder ob es unbelegt ist. In diesem Zusammenhang sind typische Sensoren zum Beispiel Lichtschranken, Lichttaster, optische Scanner oder Näherungsschalter. Diese Information wird während des Betriebs einer Förderanlage zur Überwachung und Planung des Transportflusses benötigt. Jedes Fördersegment weist einen Förderantrieb auf, z. B. Rollenantriebe, Bandantriebe, Vibrationsantriebe u. a. Zum Zweck einer individuellen Ansteuerung ist jedes Fördersegment an eine Steuerungseinheit signaltechnisch gekoppelt.

Grundsätzlich ist es bekannt, solche Fördervorrichtungen mit einer zentralen Steuerung auszurüsten. Bei einer solchen zentralen Steuerung übernimmt eine zentral angeordnete Steuerungsvorrichtung, beispielsweise eine SPS-Steuerung, die Steuerung des Fördervorgangs innerhalb der Fördervorrichtung oder eines Streckenabschnitts der Fördervorrichtung. Zu diesem Zweck sendet die zentrale Steuerungsvorrichtung über eine Buskommunikation Befehle an einzelne Steuerungseinheiten. Dies umfasst typischerweise Befehle zum Aktivieren und Deaktivieren eines Förderantriebs, Parameterangaben für die Geschwindigkeit eines Förderantriebs und der gleichen. Die zentrale Steuerungsvorrichtung empfängt mittels einer Buskommunikation wiederum Signale von den Steuerungseinheiten, beispielsweise ein Belegtsignal. Die gesamte logische Abwicklung des Fördervorgangs findet bei dieser zentralen Steuerungsweise in der zentralen Steuerungsvorrichtung statt, die einzelnen Steuerungseinheiten dienen lediglich der Umsetzung von Befehlen und Sensorsignalen.

Neben dieser zentralen Steuerungsweise ist auch eine dezentrale Steuerungsweise bekannt. Bei der dezentralen Steuerungsweise wird die logische Abwicklung des Fördervorgangs in die einzelnen Steuerungseinheiten verlegt. Die Steuerungseinheiten tauschen zu diesem Zweck untereinander Signale aus, beispielsweise können benachbarte Steuerungseinheiten in Kenntnis von der Belegtheit oder Aufnahmefähigkeit zumindest ihres stromabwärtsgelegenen benachbarten Fördersegments gesetzt sein. In Abhängigkeit des solcher Art erhaltenen Signals über die Aufnahmekapazität oder die Belegung des stromabwärts benachbarten Fördersegments aktiviert eine Steuerungseinheit den an sie angeschlossenen Förderantrieb, um auf diese Weise die Gegenstände kollisionsfrei über die Förderstrecke zu transportieren Aus US 2012/0175223 A1 und US 2012/0175225 ist eine solche Fördervorrichtung bekannt, bei der die Steuerungseinheiten mit einer Peer-to-Peer Signalverbindung untereinander verbunden sind. Eine Steuerungseinheit ist in diesem Fall ausgebildet, um mit stromabwärts und stromaufwärts Peer-to-Peer-verbundenen Steuerungseinheiten von zugeordneten Förderzonen zu kommunizieren.

WO0203153A2 offenbart ein Verfahren zur automatischen Konfiguration einer Mehrzahl von Komponenten, die einen gemeinsamen Prozess durchführen, bei dem ein Ereignis in dem Prozess ausgelöst wird und jede Komponente eine Empfangsbestätigung sendet, wenn sie dieses Ereignis registriert und eine Sendenachricht erzeugt, wenn das Ereignis für die Komponente beendet ist. Das Verfahren kann dazu dienen, um stromauf- und stromabwärts liegende Komponenten zu identifizieren.

Grundsätzlich sind auch hybride Steuerungsweisen aus zentraler und dezentraler Steuerungsweise umsetzbar bei denen Teile der Logik zentral und Teile der Logik dezentral angeordnet sind. Unabhängig von der Steuerungsweise im Betrieb muss bei einer Neuinstallation einer Fördervorrichtung jedes Fördersegment individuell konfiguriert werden. Dies ist mit einem nennenswerten Arbeits- und Zeitaufwand verbunden, da es eine Vielzahl zu setzender Parameter zum Konfigurieren der Steuerungseinheiten erfordert. Die Einrichtung von komplexen Fördervorrichtungen setzt zudem qualifiziertes Fachpersonal voraus. Dennoch ist aufgrund der Komplexität die Wahrscheinlichkeit groß, dass einzelne Steuerungseinheiten fehlerhaft konfiguriert werden, was wiederum einen Zeit- und Kostenmehraufwand, bedingt durch eine etwaige Fehlersuche, zur Folge haben kann.

Werden Förderstrecken bereits bestehender Fördervorrichtungen, im Rahmen von Erweiterungs- oder Umbaumaßnahmen erweitert oder geändert, ist es wichtig, dass sich die erforderlichen Installationsschritte zeitsparend und zuverlässig durchführen lassen. Stillstandzeiten der Fördervorrichtung sollten auf ein Minimum reduziert werden und so die mit dem Stillstand verbundenen wirtschaftlichen Ausfälle gering gehalten werden. Eine Anforderung an Fördervorrichtungen besteht heutzutage somit darin, dass die Fördervorrichtung mit geringerem Zeitaufwand konfiguriert werden kann.

Diese Aufgabe wird erfindungsgemäß durch ein Verfahren nach Anspruch 1 gelöst.

Unter einer Steuerungseinheit soll eine elektronische Schaltung verstanden werden, die ein Fördersegment steuert und überwacht. Eine Steuerungseinheit kann auch mehrere solche Fördersegmente steuern und überwachen. Weiterhin soll unter einem Sensorsignal ein Signalwert verstanden werden, der durch eine Sensoreinheit erzeugt wird und die Anwesenheit oder Abwesenheit eines Objektes innerhalb eines Fördersegments repräsentiert. Als Sensoreinheit eignet sich jede Komponente, die solch ein Signal erzeugen kann, z. B. eine Lichtschranke, ein Lichttaster oder ein Näherungsschalter. Unter einem Installationsparameter soll mindestens ein Datenwert verstanden werden, der in einer Steuerungseinheit abgespeichert werden kann und Informationen enthält, die bei einer Einrichtung der Fördervorrichtung erforderlich sind oder während dieser Einrichtung ermittelt werden. Hierunter können beispielsweise individuelle Busadressen, Parameter zur Konfiguration der Förderantriebe oder Parameter zur Konfiguration einer Steuerungseinheit verstanden werden. Unter einer Auslösung des Sensorsignals kann eine Änderung des Signalwertes am Ausgang einer Sensoreinheit verstanden werden, die vorzugsweise eine steigende oder eine fallende Signalflanke besitzt. Unter einem Ausbleiben des Sensorsignals soll das Ausbleiben einer Änderung des Signalwertes am Ausgang einer Sensoreinheit verstanden werden, also z. B. das Ausbleiben einer steigenden oder fallenden Signalflanke.

Das erfindungsgemäße Verfahren ermöglicht ein systematisches und zugleich selbsttätiges Einrichten von Fördervorrichtungen, wobei sich das Verfahren gleichermaßen dazu eignet, um eine Inbetriebnahme einer neuinstallierten Förderanlage durchzuführen oder um eine bereits bestehende und veränderte, beispielsweise erweiterte oder verkleinerte Anlage zu konfigurieren. Hierbei wird in einem ersten Schritt ein Objekt auf das erste Fördersegment einer Förderstrecke aufgesetzt. Bei dem Objekt kann es sich beispielsweise um ein Paket, einen Karton oder eine Transportschale handeln. Grundsätzlich ist jedes Objekt für den Einsatz in dieses Verfahren geeignet, welches die physikalischen Abmessungen der Fördervorrichtung und vorzugsweise eines Fördersegments nicht überschreitet und ohne die Gefahr einer Verklemmung durch die Fördervorrichtung befördert werden kann. Bevorzugt ist das Objekt, in seinen Abmessungen vorbestimmt und kleiner als ein Fördersegment. Nachdem ein Objekt auf das erste Fördersegment aufgesetzt wurde, wird die erste und zweite Steuerungseinheit in einen Lernmodus versetzt. Dieser Lernmodus sieht vor, dass die Steuerungseinheiten spezielle Befehle und Kommandos mittels der Buskommunikation empfangen und verarbeiten können. Im Zuge der Aktivierung des Lernmodus an der ersten Steuerungseinheit wird der erste und zweite Förderantrieb durch die erste und zweite Steuerungseinheit aktiviert. Dies kann gleichzeitig oder zeitversetzt erfolgen. Insbesondere kann dies erfolgen, indem alle Förderantriebe der Fördervorrichtung aktiviert werden. Hierdurch wird das auf dem ersten Fördersegment aufgesetzte Objekt stromabwärts bis zum Ausgangsbereich des Fördersegments befördert und in den Eingangsbereich des zweiten Fördersegments weiterbefördert, bis es schließlich vollständig auf dem zweiten Fördersegment aufliegt. Durch die Beförderung durch das erste und zweite Fördersegment, werden das erste und zweite Sensorsignal durch das Objekt ausgelöst. Bei Erfassung einer Auslösung des ersten bzw. zweiten Sensorsignals in der ersten bzw. zweiten Steuerungseinheit wird ein Installationsparameter in der ersten bzw. der zweiten Steuerungseinheit abgespeichert. Die erste und zweite Steuerungseinheit erkennen hieraus, dass sie einander direkt benachbart sind. Dadurch, dass das Abspeichern der Installationsparameter an die Beförderung des Objektes geknüpft ist, kann der Einrichtungsvorgang einer Fördervorrichtung mit dem Transport eines Objektes verknüpft werden. Hierdurch vereinfacht sich eine Einrichtung einer komplexen Förderanlage mit einer Vielzahl von Fördersegmenten, wodurch Zeit- und Kostenaufwendungen für den Einrichtungsprozess reduziert werden können. Insbesondere ist dies darin begründet, dass sich ein manueller Eingriff durch einen Anwender zum Konfigurieren aller Fördervorrichtungen einer Förderstrecke auf das Auflegen des Objektes auf das erste Fördersegment und das Aktivieren des Lernmodus beschränken kann, da erforderliche Installationsparameter selbsttätig in den Steuerungseinheiten abgespeichert werden. Es ist bevorzugt, dass der Lernmodus an der Steuerungseinheit aktiviert wird, von der aus das Objekt stromabwärts befördert werden soll.

Neben der Zeitersparnis und der Vermeidung von fehlerhaften Konfigurationen besteht ein Vorteil des beschriebenen Verfahrens darin, dass das beschriebene Installationsverfahren zum Einrichten von Fördervorrichtungen auch von nicht fachkundigen Personen ausgeführt werden kann. Zudem ist an dem erfindungsgemäßen Verfahren insbesondere vorteilhaft, dass sich die Nachbarschaftsbeziehungen der Fördersegmente innerhalb einer Förderstrecke anhand der Reihenfolge der Auslösung der Sensorsignale bestimmen lassen und selbsttätig erkannt werden. Die Kenntnis über die Nachbarschaftsbeziehungen von Fördersegmenten in einer Förderstrecke ist zum Betrieb der Förderanlage erforderlich.

Während des automatischen Förderns des Objektes in Richtung des zweiten Fördersegments, wird in der ersten Steuerungseinheit eine Übergabenachricht generiert, die Busadressinformationen enthält. Die Busadressinformation kann eine individuelle Busadresse oder einen Code enthalten, aus dem eine individuelle Busadresse erstellt werden kann. Diese individuelle Busadresse ist einer Steuerungseinheit zuzuordnen, damit eine Adressierung einer Steuerungseinheit mittels der Buskommunikation ermöglicht wird. Diese Busadressinformation ist bevorzugt eine Ziffernfolge, eine alphanumerische Zeichenfolge oder eine Buchstabenfolge bzw. eine Kombination der genannten Folgen. Die Übergabenachricht kann beispielsweise eine individuelle Busadresse enthalten, die der zweiten Steuerungseinheit zugewiesen werden soll. Ebenso kann die Übergabenachricht die individuelle Busadresse der ersten Steuerungseinheit enthalten, auf deren Grundlage in der zweiten Steuerungseinheit mittels eines Algorithmus eine individuelle Busadresse für die zweite Steuerungseinheit berechnet wird.

Während das Objekt durch den ersten Förderantrieb in Richtung des zweiten Fördersegments befördert wird, kann die erste Steuerungseinheit die Übergabenachricht mittels der Buskommunikation von der ersten Steuerungseinheit an die zweite Steuerungseinheit übermitteln. Dies erfolgt beispielsweise durch das periodische Senden der Übergabenachricht mittels der Buskommunikation. Die Übermittlung der Übergabenachricht kann ebenfalls durch das Eintreten einer vorbestimmten Bedingung ausgelöst werden, beispielsweise durch das Auslösen eines Sensorsignals in dem ersten oder zweiten Fördersegment. Sobald das Objekt durch den ersten und zweiten Förderantrieb in das zweite Fördersegment befördert wurde und in dem zweiten Fördersegment ein zweites Sensorsignal auslöst, kann der zweiten Steuerungseinheit eine individuelle Busadresse aus der Busadressinformation zugewiesen und in der zweiten Steuerungseinheit als Installationsparameter abgespeichert werden. Beispielsweise empfängt die zweite Steuerungseinheit die periodisch von der ersten Steuerungseinheit ausgesendete Übergabenachricht und verarbeitet diese dann, wenn die zweite Sensoreinheit durch das Objekt aktiviert wird und das zweites Sensorsignal auslöst. Die zweite Steuerungseinheit kann nach erfolgter Zuweisung und Abspeicherung einer individuellen Busadresse über die Buskommunikation adressiert und somit konfiguriert und gesteuert werden. Sofern weitere Fördersegmente in der Förderstrecke vorhanden sind, wird das Objekt weiterbefördert, und die beschriebenen Schritte sukzessive auf weitere stromabwärtsliegende Fördersegmente angewendet.

Die in der Regel identisch hergestellten Steuerungseinheiten verfügen zu Beginn einer Einrichtung nicht über eine individuelle Busadresse, mittels derer sie über die Buskommunikation adressiert werden können. Dieser Installationsparameter wird üblicherweise in einer manuellen Erstkonfiguration der Steuerungseinheiten einer Fördervorrichtung definiert. Das erfindungsgemäße Verfahren erleichtert eine selbsttätige, zuverlässige und zeiteffiziente Zuweisung von individuellen Busadressen als an die Steuerungseinheiten und stellt damit ein zu bevorzugendes Verfahren zur teilautomatisierten Inbetriebnahme von Fördervorrichtungen dar.

Zur Beschreibung der Funktionsweise des vorgenannten Verfahrens wurde vorausgesetzt, dass die Drehrichtung, die ein Objekt stromabwärts befördert, vorbekannt ist, beispielsweise in Folge einer Vorbestimmten Einbaulage des Förderantriebs. In einer Fördervorrichtung ist diese Voraussetzung jedoch nicht immer gegeben. So besteht bei variabler Konfiguration oder variabler Einbaulage der Förderantriebe das Problem, dass die Stromabwärts-Drehrichtung nicht eindeutig vorbestimmt ist bzw. nicht eindeutig angesteuert werden kann. Das vorgenannte Verfahren kann fortgebildet werden, indem die für eine Stromabwärtsförderung in Richtung des zweiten Fördersegment erforderliche Drehrichtung des ersten Förderantriebs selbsttätig ermittelt wird, indem im Schritt iv) eine Erkennung einer bevorzugten Drehrichtung des ersten und/oder des zweiten Förderantriebs, die das Objekt stromabwärts befördert, durchgeführt wird, mit den Schritten:
a. Fördern des Objektes,
b. Auslösen des ersten und/oder des zweiten Sensorsignals durch das Objekt,
c. Erfassen der Auslösung des ersten und/oder zweiten Sensorsignals durch die erste Steuerungseinheit,
d. gegebenenfalls Umkehren der Drehrichtung des ersten und/oder zweiten Förderantriebs in Abhängigkeit des ersten und/oder zweiten Sensorsignals,
e. Abspeichern einer ersten oder zweiten Drehrichtung des ersten Förderantriebs in der ersten Steuerungseinheit als Stromabwärts-Drehrichtung.

Unter einer Stromabwärts-Drehrichtung soll eine Drehrichtung des ersten bzw. zweiten Förderantriebs verstanden werden, durch die ein Objekt stromabwärts befördert wird. Eine Erfassung des zweiten Sensorsignals in der ersten Steuerungseinheit kann hierbei mittels einer Buskommunikation erfolgen. Hierzu können beispielsweise Sensorsignale von der ersten Steuerungseinheit aus der zweiten Steuerungseinheit mittels der Buskommunikation ausgelesen werden oder die zweite Steuerungseinheit sendet das Sensorsignal, z. B. bei einer Signaländerung, mittels der Buskommunikation an die erste Steuerungseinheit. Dies gilt anlog auch für die zweite Steuerungseinheit.

Mit Aktivieren des ersten und zweiten Förderantriebs durch die erste und zweite Steuerungseinheit ist nicht in jedem Fall eine Beförderung des Objektes in Richtung des zweiten Fördersegments gewährleistet. Insbesondere ist die Richtung, in die das Objekt befördert wird, abhängig von der Drehrichtung des Förderantriebs, welche beispielsweise von der Einbaulage des Förderantriebs in der Fördervorrichtung oder der Polarität der Versorgungsspannung des Förderantriebs oder seiner Verdrahtung abhängig ist. Das Aktivieren des ersten Förderantriebs in einer ersten Drehrichtung hat daher nicht zwangsläufig eine Beförderung des Objektes in Richtung des zweiten Fördersegments zur Folge. Weiterhin kann es durch konstruktive Beschränkungen erforderlich sein, eine Sensoreinheit innerhalb eines Fördersegments an einer geeigneten Position zu montieren. Insbesondere ergeben sich in der konkreten Umsetzung Montagepositionen in denen die Sensoreinheit stromaufwärts der Mitte eines Fördersegments oder stromabwärts der Mitte eines Fördersegments montiert wird.

Somit können unterschiedliche Fälle auftreten, in denen die Drehrichtungen der Förderantriebe und die Montageposition der Sensoreinheiten variieren und eine selbsttätige Erkennung der abwärtsfördernden Drehrichtung der Förderantriebe verkomplizieren. Beispielsweise können, bedingt durch die unbekannten Drehrichtungen beim Aktivieren eines Förderantriebs und der unbekannten Montageposition der Sensoreinheit folgende Fälle eintreten:
a) Der einfachste sich ergebende Fall besteht darin, dass die erste Sensoreinheit stromabwärts der Mitte des ersten Fördersegments montiert ist und ein Anwender das Objekt derart auf das erste Fördersegment aufsetzt, dass diese stromabwärts liegende Sensoreinheit nicht ausgelöst wird (also das Objekt nicht im Bereich der Sensoreinheit platziert wird) und der erste Förderantrieb nach dem Aktivieren in einer ersten Drehrichtung das Objekt stromabwärts befördert, so dass das erste Sensorsignal ausgelöst wird. Durch Auslösen des ersten Sensorsignals wird die erste Drehrichtung, in der der Förderantrieb aktiviert ist, als erforderliche Drehrichtung für die Stromabwärtsförderung in der ersten Steuerungseinheit abgespeichert.
b) Ein weiterer Fall ergibt sich, wenn die erste Sensoreinheit stromaufwärts der Mitte des ersten Fördersegments montiert ist und ein Anwender das Objekt derart auf das erste Fördersegment aufsetzt, dass diese stromaufwärtsliegende Sensoreinheit nicht ausgelöst wird und der erste Förderantrieb nach dem Aktivieren in einer ersten Drehrichtung das Objekt stromaufwärts befördert, so dass das erste Sensorsignal ausgelöst wird. Durch Auslösen des ersten Sensorsignals wird der Förderantrieb in einer zweiten, der ersten entgegengesetzten Drehrichtung aktiviert und diese zweite Drehrichtung als erforderliche Drehrichtung für die Stromabwärtsförderung in der ersten Steuerungseinheit abgespeichert.
c) Ein weiterer Fall ergibt sich, wenn die erste Sensoreinheit stromabwärts der Mitte des ersten Fördersegments montiert ist und ein Anwender das Objekt derart auf das erste Fördersegment aufsetzt, dass diese stromabwärtsliegende Sensoreinheit nicht ausgelöst wird und der erste Förderantrieb nach dem Aktivieren in einer ersten Drehrichtung das Objekt stromaufwärts befördert, so dass das erste Sensorsignal nicht innerhalb einer ersten Zeitdauer nach Aktivieren des ersten Förderantriebs ausgelöst wird. Durch Ausbleiben des ersten Sensorsignals wird der Förderantrieb in einer zweiten, der ersten entgegengesetzten Drehrichtung aktiviert und diese zweite Drehrichtung als erforderliche Drehrichtung für die Stromabwärtsförderung in der ersten Steuerungseinheit abgespeichert.
d) Ein weiterer Fall ergibt sich, wenn die erste Sensoreinheit stromaufwärts der Mitte des ersten Fördersegments montiert ist und ein Anwender das Objekt derart auf das erste Fördersegment aufsetzt, dass diese stromabwärtsliegende Sensoreinheit nicht ausgelöst wird und der erste Förderantrieb nach dem Aktivieren in einer ersten Drehrichtung das Objekt stromabwärts befördert, so dass das erste Sensorsignal nicht innerhalb einer ersten Zeitdauer nach Aktivieren des ersten Förderantriebs ausgelöst wird. Durch Ausbleiben des ersten Sensorsignals wird der Förderantrieb in einer zweiten, der ersten entgegengesetzten Drehrichtung aktiviert und diese zweite Drehrichtung als erforderliche Drehrichtung für die Stromabwärtsförderung in der ersten Steuerungseinheit abgespeichert.

In den Fällen a) und b) kann die Erkennung der Drehrichtung des ersten Förderantriebs unmittelbar durch das Auslösen des ersten Sensorsignals erfolgen. In den Fällen c) und d) erfolgt die die Erkennung der Drehrichtung des ersten Förderantriebs durch den Ablauf einer ersten Zeitdauer, die ab der Aktivierung des ersten Förderantriebs beginnt. Die Auflistung ist nicht als erschöpfend anzusehen. Vielmehr können weitere Fälle eintreten, wie z. B. durch uneinheitlich angebrachte Montagepositionen der Sensoreinheiten innerhalb des ersten und zweiten Fördersegments oder dadurch, dass ein Anwender das Objekt derart auf das erste Fördersegment aufsetzt, dass die erste Sensoreinheit bereits bei Aktivieren des Lernmodus ausgelöst wird.

Weiterhin ist es bevorzugt, dass die Umkehr der Drehrichtung des ersten und/oder zweiten Förderantriebs durch Ausbleiben des ersten und/oder des zweiten Sensorsignals erfolgt. Diese Ausführungsform erweitert die zuvor beschriebene Drehrichtungserkennung. Eine Umkehr der Drehrichtung kann demnach durch das Ausbleiben des ersten, des zweiten oder des ersten und zweiten Sensorsignals ausgelöst werden.

Weiterhin ist es bevorzugt, dass die Umkehr der Drehrichtung des ersten und/oder zweiten Förderantriebs in Abhängigkeit des Ausbleibens des ersten und/oder des zweiten Sensorsignals innerhalb einer vorbestimmten Zeitspanne nach Aktivieren des ersten Förderantriebs erfolgt. Diese Ausführungsform erweitert die zuvor beschriebene Drehrichtungserkennung. Eine Umkehr der Drehrichtung kann demnach durch das verstreichen einer vorbestimmten Zeitspanne ausgelöst werden, wenn innerhalb dieser Zeitspanne das erste, das zweite oder das erste und zweite Sensorsignal nicht ausgelöst werden.

Weiterhin ist es bevorzugt, dass die Umkehr der Drehrichtung des ersten und/oder zweiten Förderantriebs durch Auslösen des ersten und/oder des zweiten Sensorsignals erfolgt. Diese Ausführungsform erweitert die zuvor beschriebene Drehrichtungserkennung. Eine Umkehr der Drehrichtung kann demnach durch das Eintreten des ersten, des zweiten oder des ersten und zweiten Sensorsignals ausgelöst werden.

Weiterhin ist es bevorzugt, dass die Umkehr der Drehrichtung des ersten Förderantriebs anhand des ersten Sensorsignals ausgelöst wird und die Umkehr der Drehrichtung des zweiten Förderantriebs anhand des zweiten Sensorsignals ausgelöst wird. Diese Ausführungsform erweitert die zuvor beschriebene Drehrichtungserkennung. Eine Umkehr der Drehrichtung erfolgt insbesondere durch ein Sensorsignal des Sensors, der einem Fördersegment zugeordnet ist. Beispielsweise wird das erste Sensorsignal des ersten Fördersegments in der ersten Steuerungseinheit verarbeitet, um den ersten Förderantrieb zu steuern. Dies gilt analog für das zweite Sensorsignal und den zweiten Förderantrieb. Weiterhin ist es bevorzugt, dass bei Auslösen des ersten Sensorsignals und hierauf folgendem Auslösen des zweiten Sensorsignals innerhalb einer ersten Zeitdauer nach Auslösen des ersten Sensorsignals, die Drehrichtung des ersten Förderantriebes in der ersten Steuerungseinheit als Stromabwärts-Drehrichtung abgespeichert wird und die Drehrichtung des zweiten Förderantriebes in der zweiten Steuerungseinheit als Stromabwärts-Drehrichtung abgespeichert wird. Die Drehrichtung des ersten Förderantriebs und die Drehrichtung des zweiten Förderantriebs stellen dann die erforderlichen Drehrichtungen für die Stromabwärtsförderung dar. Es ist daher bevorzugt, diese Drehrichtungen abzuspeichern. Insbesondere ist es bevorzugt, dass die Drehrichtung des ersten Förderantriebs in der ersten Steuerungseinheit abgespeichert wird und die Drehrichtung des zweiten Förderantriebs in der zweiten Steuerungseinheit abgespeichert wird. Dies ist insbesondere dann von Vorteil, wenn die Fördervorrichtung neu gestartet wird oder durch einen plötzlichen Energieverlust innerhalb der Fördervorrichtung Konfigurationen verlorengehen. Die einmalig durch das Ausführen des Installationsverfahrens zum Einrichten der Fördervorrichtung ermittelten Drehrichtungen der Förderantriebe, die ein Transportgut stromabwärts befördern, können so wiederhergestellt werden.

Weiterhin ist es bevorzugt, dass nach einer vorbestimmten Anzahl von Umkehrungen der Drehrichtung der Lernmodus beendet wird, insbesondere, dass nach vier Umkehrungen der Drehrichtung der Lernmodus beendet wird.

In einem Fall, in dem nach wiederholter Umkehr der Drehrichtung des ersten und/oder des zweiten Förderantriebs keine Auslösung des ersten oder des zweiten Sensorsignals erfolgt, ist die Erkennung der Drehrichtung fehlerhaft und nicht erfolgreich. Ein Fehler in der Erkennung der Drehrichtung kann beispielsweise dadurch bedingt sein, dass das zu befördernde Objekt in einem Fördersegment verklemmt ist, dass es zu lang ist und nicht befördert werden kann oder das ein Objekt erst gar nicht aufgesetzt wurde. Insbesondere kann nach vier Umkehrungen der Drehrichtung, beispielsweise in dem ersten Fördersegment davon ausgegangen werden, dass ein Transport des Objektes durch das erste Fördersegment nicht möglich ist. Eine Fortsetzung des Verfahrens zum Einrichten der Fördervorrichtungen ist in diesem Fall sehr wahrscheinlich nicht mehr erfolgreich. Vielmehr ist es bevorzugt, dass die Steuerungseinheit, die die Drehrichtung wiederholt umgekehrt hat eine Fehlermeldung mittels der Buskommunikation aussendet und gegebenenfalls den Lernmodus verlässt.

Weiterhin ist es bevorzugt, dass durch Aktivieren des ersten und des zweiten Förderantriebs, vorzugsweise durch Aktivieren aller Förderantriebe, insbesondere durch Aktivieren aller Förderantriebe mit Ausnahme der Förderantriebe, die an eine Steuerungseinheit angeschlossen sind, in der bereits eine individuelle Busadresse abgespeichert wurde, das Objekt befördert wird.

Förderantriebe von stromaufwärtsliegenden Steuerungseinheiten, die bereits eine individuelle Busadresse erhalten haben, sind für das Befördern des Objektes nicht mehr erforderlich und können abgeschaltet werden. Hierdurch kann einerseits Energie eingespart werden und andererseits der Fortgang des Installationsverfahrens von einem Anwender visuell verfolgt werden.

Ein weiteres Problem besteht darin, dass die Anforderungen oder Zusammenhänge der Steuerungseinheiten innerhalb einer Fördervorrichtung im Zuge einer Neu- oder Reinstallation für den Benutzer schlecht zu erkennen sind. Gemäß einer bevorzugten Ausführungsform ist vorgesehen, dass eine zentrale Verarbeitungseinheit mittels einer Buskommunikation Daten mit der ersten und zweiten Steuerungseinheit austauschen kann, und die zentrale Verarbeitungseinheit die folgenden Schritte ausführt:
i) Auslesen von individuellen Busadressen aus den Steuerungseinheit mittels der Buskommunikation,
ii) Ermitteln der Nachbarschaftsbeziehungen der Steuerungseinheiten anhand der Abfolge der individuellen Busadressen,
iii) Abspeichern der Nachbarschaftsbeziehungen in der zentralen Verarbeitungseinheit,
iv) Visualisieren der Nachbarschaftsbeziehungen durch eine grafische Benutzerschnittstelle.

Insbesondere lässt sich mittels der Nachbarschaftsbeziehungen die Abfolge der zu aktivierenden Fördervorrichtungen ermitteln, mit der ein Transportgut stromabwärts befördert wird. Unter einer zentralen Verarbeitungseinheit kann ein Server oder ein PC oder ein dediziertes Verarbeitungsmodul mit einer bestimmten Programmierung verstanden werden. Des Weiteren soll unter einer Nachbarschaftsbeziehung die räumliche Benachbarung von Steuerungseinheiten innerhalb einer Fördervorrichtung verstanden werden. Vorzugsweise kann die zentrale Verarbeitungseinheit die ermittelten Nachbarschaftsbeziehungen vorzugsweise weiteren Systemen oder einem Anwender bereitstellen. Insbesondere ist die Kenntnis über die Nachbarschaftsbeziehung von Fördersegmenten und den zugeordneten Steuerungseinheiten eine notwendige Information zur Berechnung des Transportflusses innerhalb einer Fördervorrichtung. Weiterhin ermöglicht die Zusammenführung aller individuellen Busadressen aller Steuerungseinheiten einer Förderstrecke innerhalb einer zentralen Verarbeitungseinheit eine Konfiguration und/oder eine Überwachung der Förderstrecke von dieser zentralen Verarbeitungseinheit aus. Ist die zentrale Verarbeitungseinheit beispielsweise durch einen PC ausgeführt, kann ein darauf ausgeführtes Computerprogramm mittels der individuellen Busadressen die Konfigurationen der Steuerungseinheiten auslesen, aus den Busadressen die Nachbarschaftsbeziehungen ableiten und diese einem Anwender auf einer grafischen Ausgabeeinheit bereitstellen. Durch die grafische Darstellung der Nachbarschaftsbeziehungen und der Konfigurationen der Steuerungseinheiten können unter geringem Zeitaufwand, zugleich aber mit hoher Zuverlässigkeit, Informationen über die Konfigurationen der Fördersegmente einer Förderstrecke abgerufen werden.

Gemäß einer weiteren bevorzugten Ausführungsform ist vorgesehen, dass die zweite Steuerungseinheit eine erste Programmeinheit, die signaltechnisch mit dem zweiten Förderantrieb und der zweiten Sensoreinheit des zweiten Fördersegments gekoppelt ist, und eine zweite Programmeinheit, die signaltechnisch mit einem dritten Förderantrieb und einer dritten Sensoreinheit eines dritten Fördersegments gekoppelt ist, umfasst und dass die erste und zweite Programmeinheit innerhalb der zweiten Steuerungseinheit signaltechnisch gekoppelt sind, insbesondere, dass die erste und zweite Programmeinheit innerhalb der Steuerungseinheit mit einem gemeinsamen elektronischen Speicher signaltechnisch gekoppelt sind, und dass die erste und zweite Programmeinheit innerhalb einer Steuerungseinheit die Erkennung der Drehrichtung des zweiten und dritten Förderantriebes, die das Objekt stromabwärts befördert, nach einem der Ansprüche 3-10 durchführen, wobei die erste bzw. die zweite Programmeinheit an die Stelle der ersten bzw. zweiten Steuerungseinheit tritt, und die Kommunikation der Programmeinheiten mittels der signaltechnischen Kopplung innerhalb der Steuerungseinheit erfolgt.

Unter einer Programmeinheit soll ein Teil einer eingebetteten Software, die in einer Steuerungseinheit ausgeführt wird, verstanden werden. Solch eine Programmeinheit gestattet die Steuerung eines Förderantriebs und die Überwachung eines Sensorsignals einer Sensoreinheit. Hierdurch soll es insbesondere ermöglicht werden, dass eine einzelne Steuerungseinheit mittels einer ersten und einer zweiten Programmeinheit ein erstes und ein zweites Fördersegment steuern und überwachen kann. Diese Programmeinheiten können ebenso wie Steuerungseinheiten eine Erkennung der Drehrichtung eines Förderantriebs mit Hilfe von Sensorsignalen durchführen. Der Vorteil dieser Ausführung liegt darin, dass die Anzahl der erforderlichen Steuerungseinheiten reduziert werden kann. Die Programmeinheiten tauschen dabei Daten über die Sensorsignale und die Drehrichtung der Förderantriebe über einen gemeinsamen Speicher aus. Dieser gemeinsame Speicher ist vorzugsweise in der Steuerungseinheit integriert. Programmeinheiten existieren zudem nur innerhalb einer Steuerungseinheit. Grundsätzlich ist die Anzahl der Programmeinheiten die eine Steuerungseinheit enthält nicht begrenzt. In einer bevorzugten Ausführung enthält eine Steuerungseinheit vier Programmeinheiten zur Steuerung und Überwachung von vier Fördersegmenten. Sofern Daten mit weiteren Steuerungseinheiten ausgetauscht werden sollen, erfolgt dies mittels der eingebetteten Software der Steuerungseinheit und der Buskommunikation.

Gemäß einer weiteren bevorzugten Ausführungsform ist vorgesehen, dass die erste Steuerungseinheit in den Lernmodus versetzt wird, durch
- Auslösen eines Schalters, insbesondere durch Auslösen eines Reed-Kontakts oder eines Hallsensors mit einem Magnetsignal,
- Empfangen eines Kommandos in der ersten Steuerungseinheit mittels der Buskommunikation.

Gemäß dieser Ausführungsform, kann die Steuerungseinheit in einem Gehäuse verkapselt werden. Dies ist für Anwendungen relevant, in denen eine wasserdichte, staubdichte oder gasdichte Verkapselung der Steuerungseinheit erzielt werden soll. Durch die magnetfeldbasierte oder kommandobasierte Aktivierung des Lernmodus, kann auf den Einsatz störanfälliger mechanischer Kontakte verzichtet werden, was die Zuverlässigkeit der Steuerungseinheiten erhöht. Weiterhin wird durch diese Ausführungsform ein versehentliches Aktivieren erschwert, da entweder ein magnetisches Objekt in die Nähe der Steuerungseinheit gebracht werden muss oder ein Kommando mittels des Kommunikationsbusses übertragen werden muss. Darüber hinaus kann es vorteilhaft sein, dass das Versetzen in den Lernmodus durch einen Anwender mittels einer Bedienoberfläche erfolgt, die ein Kommando mittels der Buskommunikation an die erste Steuerungseinheit überträgt. Solch eine Bedienoberfläche befindet sich vorzugsweise an einer zentralen Verarbeitungseinheit.

Gemäß einer weiteren bevorzugten Ausführungsform ist vorgesehen, dass die individuelle Busadresse der ersten Steuerungseinheit eine zuvor manuell durch den Anwender in Form einer Ziffernfolge festgelegt wurde oder durch eine vorkonfigurierte Ursprungsnummer definiert wurde. Diese Ausführungsform ist vorteilhaft, da es in Förderanlagen üblich ist, eine strukturierte Nummerierung der Fördersegmente vorzunehmen, um Bedienpersonal die Orientierung zu erleichtern. Dies ist beispielsweise dann von Vorteil, wenn Wartungsarbeiten oder Fehlerbehebungen an einzelnen Fördervorrichtungen durchgeführt werden sollen. Daher ist es bevorzugt, der ersten Steuerungseinheit manuell eine individuelle Busadresse zuzuweisen, die sich in die Systematik der Nummerierung der Förderanlage einfügt. Alternativ kann eine vorkonfigurierte Ursprungsnummer vorteilhaft sein, da sie eine Identifizierung der ersten Steuerungseinheit ermöglicht. Die individuellen Busadressen für weitere Steuerungseinheiten können dann beispielsweise fortlaufend nummeriert werden.

Gemäß einer weiteren bevorzugten Ausführungsform ist vorgesehen, dass einer Steuerungseinheit ein individueller Klartextname zugewiesen wird, insbesondere, dass der ersten Steuerungseinheit ein Klartextname zugewiesen wird, der zuvor manuell durch den Anwender in Form einer Buchstabenfolge und/oder Ziffernfolge festgelegt wurde oder durch eine vorkonfigurierten Ursprungsklartextnamen definiert wurde. Dieser Klartextname kann aus Buchstaben und/oder Zahlen bestehen und kann vorzugsweise für weitere Steuerungseinheiten fortlaufend verändert werden, wobei die Veränderung die Buchstabenfolge und/oder die Ziffern betreffen kann. Beispielsweise kann der Klartextname aus einer eindeutigen und leicht verständlichen Zeichenkette bestehen, die den Namen der Förderstrecke beinhaltet und gefolgt ist von einer Ziffernfolge, die die Fördersegmente fortlaufend nummeriert. Unter einem Ursprungsklartextnamen soll ein Klartextname verstanden werden, der bereits vor einer Zuweisung durch einen Anwender einer Steuerungseinheit zugewiesen wurde, vorzugsweise vor einer ersten Inbetriebnahme in einer Steuerungseinheit abgespeichert wurde. Insbesondere ist ein Klartextname vorteilhaft, wenn Wartungsarbeiten und Instandhaltungsarbeiten in einer Fördervorrichtung durchgeführt werden. Fördersegmente können durch die Verwendung von Klartextnamen sicher und schnell durch Anlagenpersonal identifiziert werden.

Gemäß einer weiteren bevorzugten Ausführungsform ist vorgesehen, dass eine Mehrzahl von Steuerungseinheiten oder Programmeinheiten über eine Subadresse simultan mittels der Buskommunikation adressiert wird, insbesondere, dass simultan eine Mehrzahl von Steuerungseinheiten oder Programmeinheiten in den Lernmodus versetzt werden, die eine identische Subadresse besitzen, wobei die Subadresse
- zuvor manuell durch den Anwender in Form einer Ziffernfolge festgelegt wurde oder
- durch eine vorkonfigurierte Ursprungsnummer definiert wurde.

Unter einer Subadresse soll ein zusätzlicher Adressraum zur differenzierenden Adressierung in einer Buskommunikation verstanden werden, dem die individuelle Busadresse untergeordnet ist. Weiterhin muss die Subadresse nicht unikal sein. So kann beispielsweise einer Mehrzahl von Steuerungseinheiten eine identische Subadresse zugewiesen werden. Hierdurch können simultan eine Mehrzahl von Steuerungseinheit adressiert werden, was z. B. bei der Aktivierung des Lernmodus an weiteren Steuerungseinheiten eingesetzt werden kann. Mit solch einer Art von Subadresse können Subnetze definiert werden, in den Steuerungseinheit in Gruppen, beispielsweise einer Gruppe von Steuerungseinheiten einer einzelnen Förderstrecke, definiert werden und mittels der Buskommunikation über die Subadresse adressiert werden können.

Weiterhin ist es bevorzugt, dass die Subadresse einer Steuerungseinheit oder Programmeinheit eine zuvor manuell durch den Anwender festgelegte Ziffernfolge oder eine vorkonfigurierte Ursprungsnummer ist. Diese Ausführungsform ist vorteilhaft, da es in Förderanlagen üblich ist, eine strukturierte Nummerierung der Fördersegmente vorzunehmen, um Bedienpersonal die Orientierung zu erleichtern. Dies ist beispielsweise dann von Vorteil, wenn Wartungsarbeiten oder Fehlerbehebungen an einzelnen Fördervorrichtungen durchgeführt werden sollen. Daher ist es bevorzugt Steuerungseinheiten oder Programmeinheiten manuell eine Subadresse zuzuweisen, die sich in die Systematik der Nummerierung der Förderanlage einfügt. Alternativ kann eine vorkonfigurierte Ursprungsnummer vorteilhaft sein, da sie beispielsweise eine unkonfigurierte Steuerungseinheit einer Gruppe von unkonfigurierten Steuerungseinheiten zugeordnet werden kann.

Gemäß einer weiteren bevorzugten Ausführungsform ist vorgesehen, dass in einem Parametrierschritt dem ersten Fördersegment Förderparameter zugewiesen werden, indem entsprechende Förderparameter in der ersten Steuerungseinheit abgespeichert werden, und vorzugsweise nach Auslösen des zweiten Sensorsignals durch das Objekt, die Förderparameter der ersten Steuerungseinheit in der zweiten Steuerungseinheit abgespeichert werden.

Unter Förderparametern sollen Parameter verstanden werden, die das Befördern des Objektes beeinflussen und Parameter des Fördersegments darstellen. Dies können beispielsweise die Drehrichtung, die Drehgeschwindigkeit, die Beschleunigungsverläufe beziehungsweise Verzögerungsverläufe der Förderantriebe sein. Diese Förderparameter werden in einem eigenen Parametrierschritt, beispielsweise durch einen Anwender, in der ersten Steuerungseinheit hinterlegt. Eine Hinterlegung kann mittels der Buskommunikation erfolgen oder durch direkte manuelle Eingabe an einer Steuerungseinheit. Fördersegmente einer Förderstrecke haben häufig gleiche Förderparameter. Daher ist es bevorzugt, dass die Förderparameter, die in der ersten Steuerungseinheit hinterlegt sind, nach Auslösen des zweiten Sensorsignals Förderparameter der ersten Steuerungseinheit in die zweite Steuerungseinheit übertragen werden und dort abgespeichert werden. Hierdurch wird die Einrichtung von Förderstrecken entsprechend vereinfacht, da die Förderparameter selbsttätig in jede weitere Steuerungseinheit kopiert werden. Weiterhin ist sichergestellt, dass alle Fördersegmente einer Förderstrecke die gleichen Förderparameter erhalten.

Gemäß einer weiteren bevorzugten Ausführungsform ist vorgesehen, dass eine Steuerungseinheit
- das Beenden des Lernmodus und/oder
- die fehlerhafte Erkennung der Drehrichtung
visuell und/oder akustisch signalisiert, indem die Steuerungseinheit eines Fördersegments
- optische Signale aussendet, die durch lichtemittierende Bauteile der Steuerungseinheit des Fördersegments erzeugt werden und/oder
- ein vorbestimmtes Muster einer Sequenz aus Aktivieren und Deaktivieren des Förderantriebs des Fördersegments steuert und/oder
- einen elektroakustischen Schallwandler aktiviert, der in die Steuerungseinheit integriert ist.

Gemäß dieser Ausführungsform wird eine visuelle und/oder akustische Benutzerschnittstelle geschaffen. Diese Benutzerschnittstelle soll einem Anwender den Zustand des Lernmodus, insbesondere das Beenden des Lernmodus, anzeigen können und/oder dem Benutzer eine fehlerhafte Erkennung der Drehrichtung signalisieren können. Eine visuelle Signalisierung kann dabei durch optische Signale, die durch entsprechende Lichtquellen, wie zum Beispiel Leuchtdioden oder Blitzlampen, ausgeführt sind, erfolgen oder aber durch eine vorbestimmte Sequenz aus Aktivieren und Deaktivieren eines Förderantriebs eines Fördersegments. Hierbei kann es sich beispielsweise um eine Sequenz handeln, bei der der Förderantrieb durch die Steuerungseinheit eine Sekunde aktiviert ist und drei Sekunden deaktiviert wird. Diese Sequenz kann eine vorbestimmte Anzahl von Wiederholungen erfahren oder durch eine Bedingung, wie zum Beispiel das Beenden des Lernmodus, beendet werden. Weiterhin kann es bevorzugt sein, dass ein akustisches Signal das Beenden des Lernmodus und/oder eine fehlerhafte Erkennung der Drehrichtung signalisiert. Dieses akustische Signal kann durch einen elektroakustischen Schallwandler, der vorzugsweise in eine Steuerungseinheit integriert und gekapselt ist, ausgesendet werden. Der Vorteil einer akustischen Signalisierung ist darin zu sehen, dass keine Sichtverbindung zu der Steuerungseinheit erforderlich ist.

Gemäß eines weiteren Aspekts der Erfindung wird die eingangsgenannte Aufgabe gelöst durch eine Vorrichtung, insbesondere einer Fördervorrichtung.

Die Umsetzung des Verfahrens erfolgt durch eine Fördervorrichtung, die eine erste Steuerungseinheit, welche ein stromaufwärtsliegendes erstes Fördersegment steuert und eine zweite Steuerungseinheit, welche ein stromabwärtsliegendes zweites Fördersegment steuert, umfasst, wobei das erste Fördersegment
- einen ersten Förderantrieb zum Fördern eines Objekts durch das erste Fördersegment und
- eine erste Sensoreinheit zum Erfassen eines Objekts an einer Position innerhalb des ersten Fördersegments,
umfasst, und das zweite Fördersegment
- einen zweiten Förderantrieb zum Fördern eines Objekts durch das zweite Fördersegment und
- eine zweite Sensoreinheit zum Erfassen eines Objekts an einer Position innerhalb des zweiten Fördersegments,
umfasst, und
- der erste Förderantrieb und die erste Sensoreinheit ausgebildet sind, um signaltechnisch mit der ersten Steuerungseinheit gekoppelt zu werden,
- der zweite Förderantrieb und die zweite Sensoreinheit ausgebildet sind, um signaltechnisch mit der zweiten Steuerungseinheit gekoppelt zu werden,
- die erste und die zweite Steuerungseinheit ausgebildet sind, um signaltechnisch mittels einer Buskommunikation miteinander gekoppelt zu werden,
- das erste Fördersegment ausgebildet ist, um ein Objekt auf das erste Fördersegment aufsetzen zu können,
- die erste und zweite Steuerungseinheit ausgebildet sind, um in einen Lernmodus versetzt zu werden,
- die erste und zweite Steuerungseinheit ausgebildet sind, um den ersten und zweiten Förderantrieb zu aktivieren,
- die zweite Steuerungseinheit ausgebildet ist, um einen Installationsparameter in Abhängigkeit der Auslösung des ersten und/oder zweiten Sensorsignals abzuspeichern,
Weiterhin kann die Fördervorrichtung fortgebildet werden, indem
- die ersten Steuerungseinheit ausgebildet ist, eine Übergabenachricht mit einer Busadressinformation zu generieren,
- die erste Steuerungseinheit ausgebildet ist, um eine Übergabenachricht mittels der Buskommunikation an die zweite Steuerungseinheit zu senden und die zweite Steuerungseinheit ausgebildet ist, um eine Übergabenachricht mittels der Buskommunikation von der ersten Steuerungseinheit zu empfangen,
- die zweite Steuerungseinheit ausgebildet ist, um aus der Busadressinformation eine individuelle Busadresse als Installationsparameter abzuleiten und diese abzuspeichern, wenn ein zweites Sensorsignal durch das Objekt ausgelöst wird.

Weiterhin kann die Fördervorrichtung fortgebildet werden, indem
- die erste Steuerungseinheit ausgebildet ist, um die Auslösung des ersten und/oder zweiten Sensorsignals zu erfassen,
- die erste und oder zweite Steuerungseinheit ausgebildet sind, um die Drehrichtung des ersten und/oder zweiten Förderantriebs in Abhängigkeit des ersten und/oder zweiten Sensorsignals umzukehren,
- die erste Steuerungseinheit ausgebildet ist, um eine Drehrichtung des Förderantriebs in der ersten Steuerungseinheit als Stromabwärts-Drehrichtung abzuspeichern.

Weiterhin kann die Fördervorrichtung fortgebildet werden, indem
- die erste Steuerungseinheit ausgebildet ist, um ein erstes Sensorsignal der ersten Sensoreinheit zu erwarten,
- die zweite Steuerungseinheit ausgebildet ist, um ein zweites Sensorsignal der zweiten Sensoreinheit zu erwarten,
- die erste Steuerungseinheit ausgebildet ist, um bei Ausbleiben des erstes Sensorsignals der ersten Sensoreinheit die Drehrichtung des ersten Förderantriebs umzukehren,
- die erste und zweite Steuerungseinheit ausgebildet sind, um die Drehrichtung des ersten bzw. zweiten Förderantriebs in Abhängigkeit des Ausbleibens des ersten und/oder des zweiten Sensorsignals innerhalb einer vorbestimmten Zeitspanne nach Aktivieren des ersten Förderantriebs umzukehren.
- die erste Steuerungseinheit ausgebildet ist, um bei Auslösen des ersten Sensorsignals eine Drehrichtung des ersten Förderantriebs abzuspeichern,
- die zweite Steuerungseinheit ausgebildet ist, um bei Auslösen des zweiten Sensorsignals eine Drehrichtung des zweiten Förderantriebs abzuspeichern,
- die zweite Steuerungseinheit ausgebildet ist, um bei Ausbleiben des zweites Sensorsignals der zweiten Sensoreinheit die Drehrichtung des zweiten Förderantriebs umzukehren,

Weiterhin kann die Fördervorrichtung fortgebildet werden, indem die erste oder die zweite Steuerungseinheit ausgebildet sind, um nach einer vorbestimmten Anzahl von Umkehrungen der Drehrichtung den Lernmodus zu beenden.

Weiterhin kann die Fördervorrichtung fortgebildet werden, indem eine zentrale Verarbeitungseinheit ausgebildet ist, um
- mittels einer Buskommunikation individuelle Busadressen aus Steuerungseinheiten auszulesen,
- aus der Abfolge der individuellen Busadressen Nachbarschaftsbeziehungen der Steuerungseinheiten zu ermitteln,
- Nachbarschaftsbeziehungen abzuspeichern,
- Nachbarschaftsbeziehungen mittels einer grafischen Benutzerschnittstelle zu visualisieren.

Weiterhin kann die Fördervorrichtung fortgebildet werden, indem eine Steuerungseinheit ausgebildet ist, um
- eine erste Programmeinheit signaltechnisch mit dem zweiten Förderantrieb und einer zweiten Sensoreinheit eines zweiten Fördersegments zu koppeln,
- eine zweite Programmeinheit signaltechnisch mit einem dritten Förderantrieb und einer dritten Sensoreinheit eines dritten Fördersegments zu koppeln,
- die erste und zweite Programmeinheit innerhalb der Steuerungseinheit signaltechnisch zu koppeln, insbesondere, um die erste und zweite Programmeinheit innerhalb der zweiten Steuerungseinheit mittels eines gemeinsamen elektrischen Speichers signaltechnisch zu koppeln,
- die Erkennung der Drehrichtung des dritten und vierten Förderantriebs mittels der Programmeinheiten durchzuführen,
- die zweite Steuerungseinheit ausgebildet ist, um eine signaltechnischen Kopplung der Programmeinheiten innerhalb der zweiten Steuerungseinheit zu ermöglichen,
die erste und zweite Programmeinheit ausgebildet sind, um mittels der signaltechnischen Kopplung zu kommunizieren. Weiterhin kann die Fördervorrichtung fortgebildet werden, indem
- die erste Steuerungseinheit ausgebildet ist, um durch Auslösen eines Schalters, insbesondere durch Auslösen eines Reed-Kontakts oder eines Hallsensors mit einem Magnetsignal, in den Lernmodus versetzt zu werden,
- die erste Steuerungseinheit ausgebildet ist, um durch Empfang eines Kommandos mittels der Buskommunikation in den Lernmodus versetzt zu werden.

Weiterhin kann die Fördervorrichtung fortgebildet werden, indem die erste Steuerungseinheit ausgebildet ist, um
- eine individuelle Busadresse manuell durch den Anwender zugewiesen zu bekommen, oder
- eine vorkonfigurierte Ursprungsnummer abzuspeichern.

Weiterhin kann die Fördervorrichtung fortgebildet werden, indem eine Steuerungseinheit ausgebildet ist, um einen individuellen Klartextnamen zugewiesen zu bekommen, der eine Buchstabenfolge und/oder Ziffernfolge ist oder um einen vorkonfigurierten Ursprungsklartextnamen zugewiesen zu bekommen.

Weiterhin kann die Fördervorrichtung fortgebildet werden, indem eine Steuerungseinheit ausgebildet ist, um über eine Subadresse mittels der Buskommunikation adressiert zu werden, wobei die Subadresse eine zuvor manuell durch den Anwender festgelegte Ziffernfolge ist, oder eine vorkonfigurierte Ursprungsnummer ist.

Weiterhin kann die Fördervorrichtung fortgebildet werden, in einem Parametrierschritt dem ersten Fördersegment Förderparameter zugewiesen werden, und
- die erste Steuerungseinheit ausgebildet ist, um entsprechende Förderparameter abzuspeichern,
- die zweite Steuerungseinheit ausgebildet ist, um nach Auslösen des zweiten Sensorsignals durch das Objekt, die Förderparameter der ersten Steuerungseinheit abzuspeichern.

Weiterhin kann die Fördervorrichtung fortgebildet werden, indem eine Steuerungseinheit ausgebildet ist, um bei Beendigung des Lernmodus und/oder bei einer fehlerhaften Erkennung der Drehrichtung
- optische Signale auszusenden, die durch lichtemittierende Bauteile der Steuerungseinheit des Fördersegments erzeugt werden und/oder
- den Förderantrieb eines Fördersegments in einem vorbestimmten Muster einer Sequenz zu Aktivieren und zu Deaktivieren und/oder
- einen elektroakustischen Schallwandler zu aktivieren.

Zu der Funktionsweise, den Vorteilen und den Varianten der erfindungsgemäßen Fördervorrichtung und derer Fortbildungen wird auf die zu den Vorrichtungsmerkmalen korrespondierenden Verfahrensmerkmale und die zugehörigen voranstehenden Beschreibungsteile Bezug genommen.

Bevorzugte Ausführungsformen werden anhand der beiliegenden Figuren erläutert. Es zeigen
- Fig. 1: eine schematische Ansicht einer Förderstrecke bestehend aus einem ersten und einem zweiten Fördersegment und einem angedeuteten dritten Fördersegment, mit stromabwärts montierten Sensoreinheiten
- Fig. 2 a-f: einen beispielhaften Ablauf des erfindungsgemäßen Verfahrens, mit stromabwärtsliegenden Sensoreinheiten
- Fig. 3: eine schematische Ansicht einer Förderstrecke bestehend aus einem ersten und einem zweiten Fördersegment und einem angedeuteten dritten Fördersegment, mit stromaufwärts montierten Sensoreinheiten
- Fig. 4 a-f: einen beispielhaften Ablauf des erfindungsgemäßen Verfahrens, mit stromaufwärts liegenden Sensoreinheiten
- Fig. 5: eine schematische Ansicht einer Förderstrecke bestehend aus eine Steuerungseinheit mit vier Programmeinheiten zur Steuerung von vier Fördersegmenten
- Fig. 6: ein Ablaufdiagramm der Erkennung der Drehrichtung der Förderantriebe
- Fig. 7: eine schematische Darstellung der Visualisierung der Nachbarschaftsbeziehungen

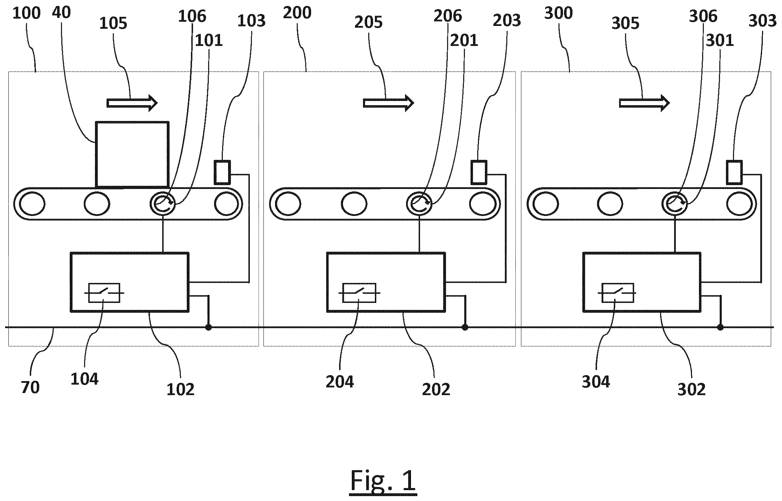

In Fig. 1 ist ein Ausschnitt aus einer Fördervorrichtung abgebildet, der aus insgesamt drei Fördersegmenten 100-300 besteht. Die Fördersegmente 100-200 sind direkt benachbart und bilden eine Förderstrecke. Das Vorhandensein des Fördersegments 300 ist nicht obligatorisch.

Jedes Fördersegment 100 - 300 enthält einen Förderantrieb 101 - 301, der die Leerlaufrollen des Fördersegments über Riemen mit antreibt und so das Transportgut 40 befördert. Die Förderrichtung 105-305 wird durch die Drehrichtung 106-306 der Förderantriebe 101-301 bestimmt. Die Drehrichtung ist so konfiguriert, dass das Transportgut stromabwärts befördert wird.

Desweiteren verfügt jedes Fördersegment über eine Steuerungseinheit 102-302, die jeweils einen Hall-Effekt Sensor 104-304 zum Aktivieren des Lernmodus beinhaltet.

An diese Steuerungseinheit 102-302 ist jeweils eine stromabwärts der Mitte des Fördersegments montierte Sensoreinheit 103-303 angeschlossen. Diese Sensoreinheit ist so angeordnet, dass das Vorhandensein eines Transportguts im Austrittsbereich der einzelnen Fördersegmente überprüft werden kann.

Auch die Förderantriebe 101-301 sind an die Steuerungseinheiten 103-303 angeschlossen.

Ein Datenaustausch zwischen den Steuerungseinheiten kann mittels der Buskommunikation 70 erfolgen.

In Fig. 1 ist der Ausgangszustand eines Einrichtungsvorganges schematisch dargestellt. Ein Anwender hat ein Transportgut auf das erste Fördersegment 100 gelegt und kann durch Annähern eines Magneten (in Fig. 1 nicht dargestellt) an den Hall-Effekt Sensor 104 den Lernmodus aktivieren. Infolge der Aktivierung wird ein Kommando über die Buskommunikation 70 an die anderen Fördersegmente 200 und optional 300 gesendet, wodurch auch die Steuerungseinheiten 202 und optional 302 in den Lernmodus versetzt werden.

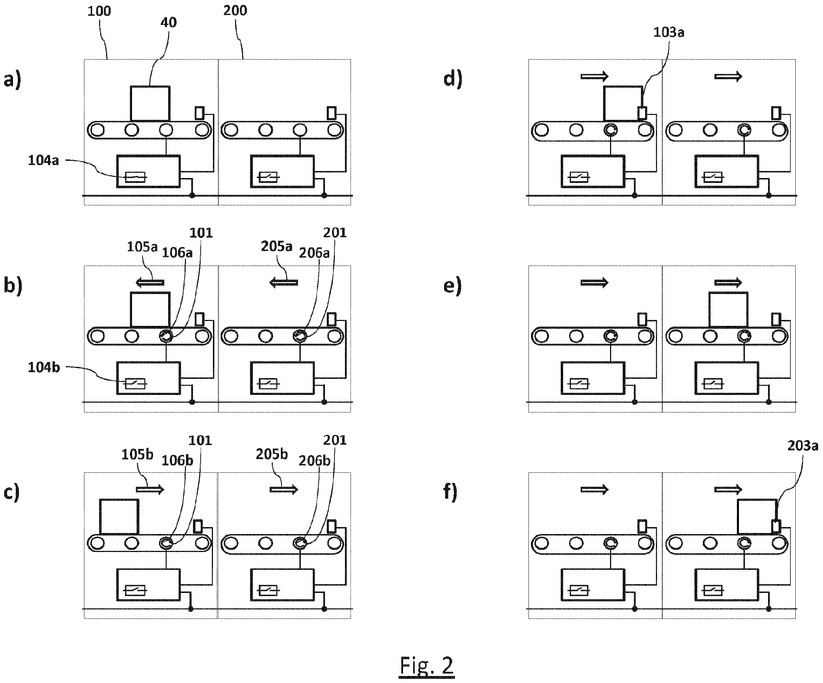

Ein exemplarischer Ablauf des erfindungsgemäßen Verfahrens ist in Fig. 2 a-f wiedergegeben.

Die Fig. 2 a) stellt exemplarisch die Ausgangssituation zum durchlaufen der erfindungsgemäßen Verfahrens dar. Es sind zwei Fördersegmente 100-200 dargestellt. Auf dem Fördersegment 100 befindet sich ein Transportgut 40. Der Hallsensor 104a der ersten Steuerungseinheit ist bereits durch einen Anwender durch Anhalten eines Magneten aktiviert, was durch den geschlossenen Schaltkontakt symbolisiert wird.

In Fig. 2 b) wurde der Magnet wieder von dem Hallsensor 104b entfernt, durch den geöffneten Schaltkontakt symbolisiert wird. Mit Öffnen dieses Schaltkontaktes wird der Lernmodus aktiviert und der Förderantrieb 101 mit einer ersten Drehrichtung 106a aktiviert. Zudem wird mittels eines Kommandos, welches mittels der Buskommunikation an die Steuerungseinheit des Fördersegments 200 übertragen wird, der Förderantrieb 201 ebenfalls aktiviert und besitzt die Drehrichtung 206a. Dadurch bildet sich die Förderrichtung 105a und 205a in den beiden Fördersegmente aus, wodurch das Transportgut befördert wird.

In Fig. 2 c) ist der Verfahrensschritt dargestellt, der nach Ablauf einer ersten Zeitdauer erfolgt, während der die erste Steuerungseinheit kein Signal von der ersten Sensoreinheit erhalten hat. In der Folge werden die Drehrichtungen der Förderantriebe durch die Steuerungseinheiten umgekehrt und es ergeben sich die Drehrichtungen 106b und 206b für die Förderantriebe 101-201. Das Transportgut wird im Zuge der Umkehr der Drehrichtung in die installationsgemäße stromabwärtsführende Richtung befördert.

Wird nun, wie in Fig. 2 d) dargestellt, die Sensoreinheit 103a des ersten Fördersegments aktiviert so werden die Drehrichtungen 106b und 206b der Förderantriebe in den Steuerungseinheiten als neue bevorzugte Drehrichtung abgespeichert.

Das Transportgut wird weiterhin stromabwärts befördert wie Fig. 2e) verdeutlicht.

Fig. 2f) zeigt den verfahrensgemäßen Schritt der Aktivierung der zweiten Sensoreinheit 203a. Durch die Aktivierung wird schließlich eine individuelle Busadresse erzeugt, die sich um den Wert Eins von der individuellen Busadresse der ersten Steuerungseinheit unterscheidet und in der zweiten Steuerungseinheit abgespeichert. Zusätzlich wird ein Kommando an die erste Steuerungseinheit übertragen, das signalisiert, dass die zweite Sensoreinheit des zweiten Fördersegments aktiviert wurde. Ab diesem Zeitpunkt sind das erste und das zweite Fördersegment konfiguriert:
- die Drehrichtung der Förderantriebe, welche das Transportgut stromabwärts befördern, sind ermittelt,
- die Fördersegmente sind mittels der Buskommunikation adressierbar und
- die Nachbarschaftsbeziehung lässt sich aus ihren Busadressen ableiten.

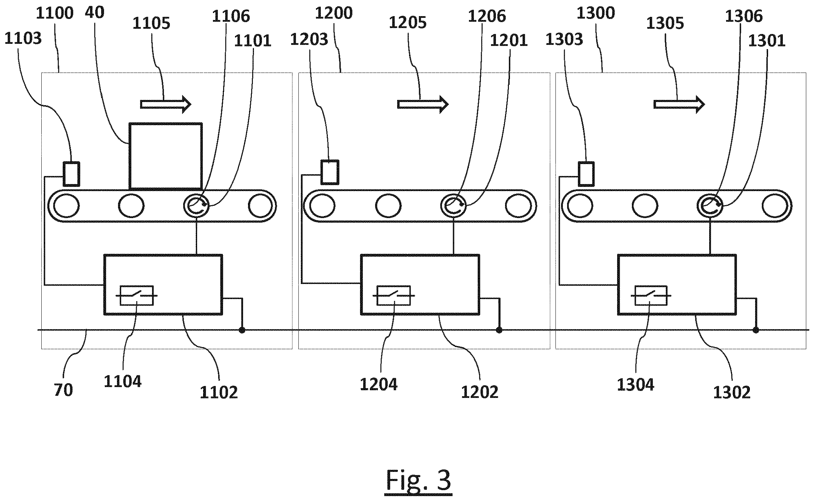

In Fig. 3 ist eine Fördervorrichtung abgebildet, die aus insgesamt drei Fördersegmenten 1100 - 1300 besteht. Die Fördersegmente 1100-1200 sind direkt benachbart und bilden eine Förderstrecke. Das Vorhandensein des Fördersegments 1300 ist nicht obligatorisch was durch die Strichelung dieses Fördersegments 1300 angedeutet wird.

Jedes Fördersegment 1100-1300 enthält einen Förderantrieb 1101-1301, der die Leerlaufrollen des Fördersegments über Riemen mit antreibt und so das Transportgut 40 befördert. Die Förderrichtung 1105-1305 wird durch die Drehrichtung 1106-1306 der Förderantriebe 1101-1301 bestimmt. Die Drehrichtung ist so konfiguriert, dass das Transportgut stromabwärts befördert wird.

Desweiteren verfügt jedes Fördersegment über eine Steuerungseinheit 1102-1302, die jeweils einen Hallsensor 1104-1304 zum Aktivieren des Lernmodus beinhaltet.

An diese Steuerungseinheit 1102-1302 ist jeweils eine stromaufwärts der Mitte des Fördersegments montierte Sensoreinheit 1103-1303 angeschlossen. Diese Sensoreinheit ist so angeordnet, dass das Vorhandensein eines Transportguts im Eintrittsbereich der einzelnen Fördersegmente überprüft werden kann.

Auch die Förderantriebe 1101-1301 sind an die Steuerungseinheiten 1103-1303 angeschlossen.

Ein Datenaustausch zwischen den Steuerungseinheiten kann mittels der Buskommunikation 70 erfolgen.

In Fig. 3 ist der Ausgangszustand eines Einrichtungsvorganges schematisch dargestellt. Ein Anwender hat ein Transportgut auf das erste Fördersegment 1100 gelegt und kann durch Annähern eines Magneten (in Fig. 3 nicht dargestellt) an den Hallsensor 1104 den Lernmodus aktivieren. Infolge der Aktivierung wird ein Kommando mittels der Buskommunikation 70 an die Steuerungseinheiten 1202 und optional 1302 gesendet, wodurch diese in den Lernmodus versetzt werden.

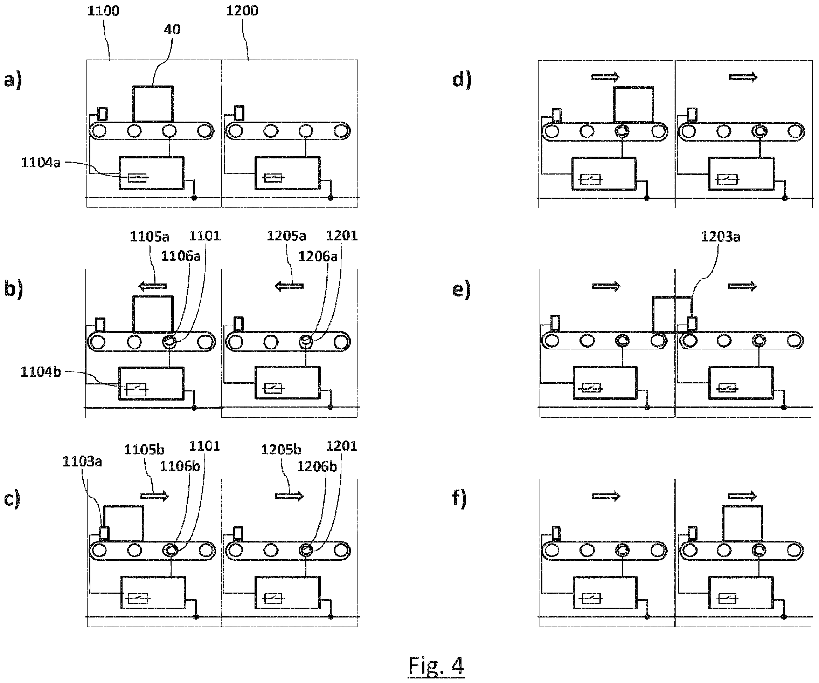

Ein exemplarischer Ablauf des erfindungsgemäßen Verfahrens ist in Fig. 4 a-f wiedergegeben.

Die Fig. 4 a) stellt exemplarisch die Ausgangssituation zum Durchlaufen der erfindungsgemäßen Verfahrens dar. Es sind zwei Fördersegmente 1100-1200 dargestellt. Auf dem Fördersegment 1100 befindet sich ein Transportgut 40. Der Hallsensor 1104a der ersten Steuerungseinheit ist bereits durch einen Anwender durch Anhalten eines Magneten aktiviert, was durch den geschlossenen Schaltkontakt symbolisiert wird.

In Fig. 4 b) wurde der Magnet wieder von dem Hallsensor 1104b entfernt, was durch den geöffneten Schaltkontakt symbolisiert wird. Mit Öffnen dieses Schaltkontaktes wird der Lernmodus aktiviert und der Förderantrieb 1101 mit einer ersten Drehrichtung 1106a aktiviert. Zudem wird mittels eines Kommandos, welches mittels der Buskommunikation an die Steuerungseinheit des Fördersegments 1200 übertragen wird, der Förderantrieb 1201 ebenfalls aktiviert und besitzt die Drehrichtung 1206a. Dadurch bildet sich die Förderrichtung 1105a und 1205a in den beiden Fördersegmenten aus, wodurch das Transportgut befördert wird.

In Fig. 4 c) ist der Verfahrensschritt dargestellt, der bei Aktivierung der Sensoreinheit 1103a ausgelöst wird. In der Folge werden die Drehrichtungen der Förderantriebe durch die Steuerungseinheiten umgekehrt und es ergeben sich die Drehrichtungen 1106b und 1206b für die Förderantriebe. Die neuen Drehrichtungen 1106b und 1206b der Förderantriebe werden in den Steuerungseinheiten als neue bevorzugte Drehrichtung abgespeichert. Das Transportgut wird im Zuge der Umkehr der Drehrichtung in die installationsgemäße stromabwärtsführende Richtung befördert.

Daraufhin wird das Transportgut weiterhin stromabwärts befördert, wie Fig. 4 d) verdeutlicht.

In Fig. 4 e) wird die Sensoreinheit 1203a des zweiten Fördersegments aktiviert, wodurch eine individuelle Busadresse erzeugt wird, die sich um den Wert Eins von der individuellen Busadresse der ersten Steuerungseinheit unterscheidet und in der zweiten Steuerungseinheit abgespeichert wird. Zusätzlich wird ein Kommando an die erste Steuerungseinheit übertragen, das signalisiert, dass die zweite Sensoreinheit des zweiten Fördersegments aktiviert wurde. Ab diesem Zeitpunkt sind das erste und das zweite Fördersegment konfiguriert:
- die Drehrichtung der Förderantriebe, welche das Transportgut stromabwärts befördern, sind ermittelt,
- die Fördervorrichtungen sind mittels der Buskommunikation adressierbar und
- die Nachbarschaftsbeziehung lässt sich aus ihren Busadressen ableiten.

Fig. 4 f) stellt die fortgesetzte Beförderung des Transportguts dar.

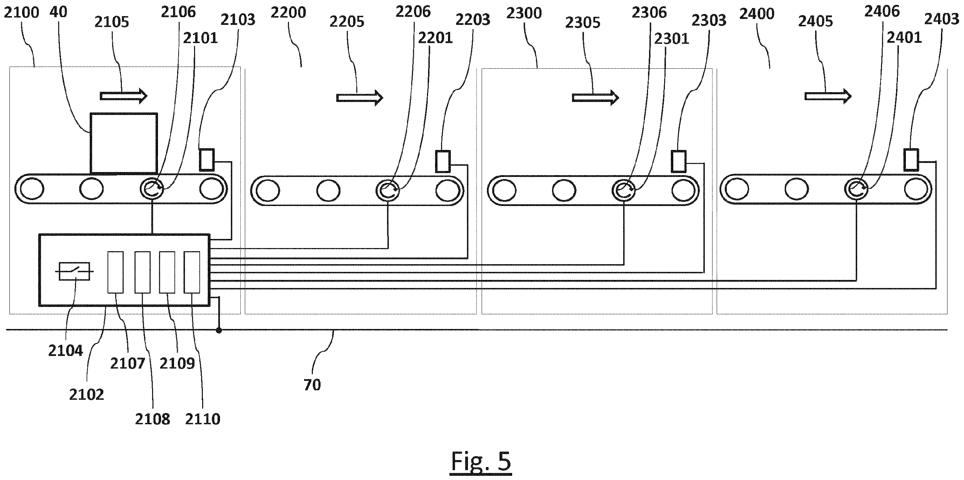

Fig. 5 stellt eine Fördervorrichtung dar, bei der eine Steuerungseinheit 2102 eine Mehrzahl von Fördersegmenten 2100, 2200, 2300, 2400 steuert, wobei die Steuerung durch die Programmeinheiten 2107-2110 erfolgt, die innerhalb der Steuerungseinheit 2102 ausgeführt werden. Die Programmeinheiten 2107-2110 steuern die Förderantriebe 2101, 2201, 2301, 2401 und kontrollieren die Drehrichtung 2106, 2206, 2306, 2406 der Förderantriebe, um ein Transportgut 40 stromabwärts zu befördern. Durch die Umkehr der Drehrichtung 2106, 2206, 2306, 2406 können die Programmeinheiten die Förderrichtungen 2105, 2205, 2305, 2405 in den Fördersegmenten 2100, 2200, 2300, 2400 kontrollieren. Zudem werten die Programmeinheiten 2107-2110 die Signale der Sensoreinheiten 2103, 2203, 2303, 2403 aus. Die Programmeinheiten können innerhalb der Steuerungseinheit Daten austauschen, um z. B. die Erkennung der Drehrichtung der Förderantriebe durchzuführen. Darüberhinaus ist die Steuerungseinheit 2102 in die Buskommunikation 70 eingebunden und ermöglicht einen Datenaustausch z. B. mit anderen Steuerungseinheiten.

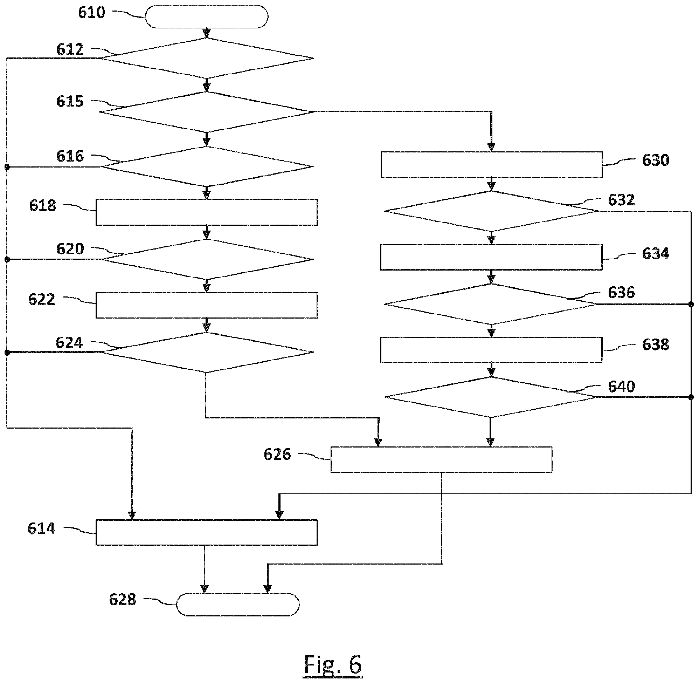

Fig. 6 beschreibt einen beispielhaften Ablauf zur Erkennung der Drehrichtung der Förderantriebe. Das Verfahren beginnt mit einem Startschritt 610 und prüft in einem Prüfschritt 612, ob die erste und die zweite Sensoreinheit innerhalb einer ersten Zeitdauer durch das Befördern des Objektes aktiviert wurden. Wurden die erste und die zweite Sensoreinheit innerhalb einer ersten Zeitdauer aktiviert, so wird der Schritt 614 ausgeführt. Im Schritt 614 wird die Drehrichtung des ersten Förderantriebs in der ersten Steuerungseinheit abgespeichert und die Drehrichtung des zweiten Förderantriebs in der zweiten Steuerungseinheit abgespeichert. Danach endet das Verfahren zur Erkennung der Drehrichtung der Förderantriebe im Schritt 628. Wird im Prüfschritt 612 die Aktivierung der ersten und zweiten Sensoreinheit nicht erkannt, so wird der Prüfschritt 615 ausgeführt, wobei überprüft wird, ob die erste Sensoreinheit innerhalb einer ersten Zeitdauer aktiviert wurde. Wurde die erste Sensoreinheit nicht innerhalb einer ersten Zeitdauer aktiviert, so wird der Prüfschritt 616 ausgeführt, wobei im Prüfschritt 616 geprüft wird, ob die zweite Sensoreinheit innerhalb der ersten Zeitdauer aktiviert wurde. Wurde die zweite Sensoreinheit innerhalb der ersten Zeitdauer aktiviert, so wird der Schritt 614 ausgeführt, in dem die Drehrichtung des ersten Förderantriebs in der ersten Steuerungseinheit abgespeichert wird und die Drehrichtung des zweiten Förderantriebs in der zweiten Steuerungseinheit abgespeichert wird. Danach endet das Verfahren im Schritt 628. Wurde in dem Prüfschritt 616 keine Aktivierung der zweiten Sensoreinheit detektiert, so wird der Schritt 618 ausgeführt, in dem die Drehrichtung des ersten Förderantriebs durch die erste Steuerungseinheit umgekehrt wird. In dem darauffolgenden Prüfschritt 620 wird geprüft, ob die zweite Sensoreinheit innerhalb einer ersten Zeitdauer aktiviert wurde. Wurde die zweite Sensoreinheit innerhalb einer ersten Zeitdauer aktiviert, so wird der Schritt 614 ausgeführt, in dem die Drehrichtung des ersten Förderantriebs in der ersten Steuerungseinheit abgespeichert wird und die Drehrichtung des zweiten Förderantriebs in der zweiten Steuerungseinheit abgespeichert wird. Danach endet das Verfahren im Schritt 628. Wird in Schritt 620 die zweite Sensoreinheit nicht innerhalb einer ersten Zeitdauer aktiviert, so wird der Schritt 622 ausgeführt. Im Schritt 622 wird die Drehrichtung des zweiten Förderantriebs durch die zweite Steuerungseinheit umgekehrt. In dem darauffolgenden Prüfschritt 624 wird geprüft, ob die zweite Sensoreinheit innerhalb einer ersten Zeitdauer durch das Objekt aktiviert wurde. Wurde die zweite Sensoreinheit durch das Objekt aktiviert, so wird der Schritt 614 ausgeführt, in dem die Drehrichtung des ersten Förderantriebs in der ersten Steuerungseinheit abgespeichert wird und die Drehrichtung des zweiten Förderantriebs in der zweiten Steuerungseinheit abgespeichert wird. Danach endet das Verfahren im Schritt 628. Wird im Prüfschritt 624 die zweite Sensoreinheit nicht innerhalb einer ersten Zeitdauer aktiviert, so wird der Schritt 626 ausgeführt. Im Schritt 626 wird eine Fehlermeldung generiert, da das Verfahren keine Kombination von Drehrichtungen ermitteln konnte, die das Objekt derart befördern, dass die erste und die zweite Steuerungseinheit innerhalb einer ersten Zeitdauer durch das Objekt aktiviert werden. Nach dem Schritt 626 folgt der Schritt 628 mit dem das Verfahren beendet wird. Wurde im Prüfschritt 615 die erste Sensoreinheit innerhalb einer ersten Zeitdauer aktiviert, so wird im Folgenden der Schritt 630 ausgeführt, in dem die Drehrichtung des zweiten Förderantriebs umgekehrt wird. Im folgenden Prüfschritt 632 wird geprüft, ob die zweite Sensoreinheit innerhalb einer ersten Zeitdauer aktiviert wurde. Sofern die zweite Sensoreinheit aktiviert wurde, wird der Schritt 614 ausgeführt, in dem die Drehrichtung des ersten Förderantriebs in der ersten Steuerungseinheit abgespeichert wird und die Drehrichtung des zweiten Förderantriebs in der zweiten Steuerungseinheit abgespeichert wird. Danach endet das Verfahren im Schritt 628. Wurde im Prüfschritt 632 die zweite Sensoreinheit nicht innerhalb einer ersten Zeitdauer aktiviert, wird der Schritt 634 ausgeführt und die Drehrichtung des ersten Förderantriebs durch die erste Steuerungseinheit umgekehrt. In dem darauffolgenden Prüfschritt 636 wird geprüft, ob die zweite Sensoreinheit innerhalb einer ersten Zeitdauer aktiviert wurde. Wurde die zweite Sensoreinheit innerhalb einer ersten Zeitdauer aktiviert, so wird der Schritt 614 ausgeführt, in dem die Drehrichtung des ersten Förderantriebs in der ersten Steuerungseinheit abgespeichert wird und die Drehrichtung des zweiten Förderantriebs in der zweiten Steuerungseinheit abgespeichert wird. Danach endet das Verfahren im Schritt 628. Wird im Prüfschritt 636 die zweite Sensoreinheit nicht innerhalb einer ersten Zeitdauer aktiviert, so wird der Schritt 638 ausgeführt. Im Schritt 638 wird die Drehrichtung des zweiten Förderantriebs durch die zweite Steuerungseinheit umgekehrt. In dem darauffolgenden Prüfschritt 640 wird geprüft, ob die zweite Sensoreinheit innerhalb einer ersten Zeitdauer aktiviert wurde. Wurde die zweite Sensoreinheit innerhalb einer ersten Zeitdauer aktiviert, so wird der Schritt 614 ausgeführt, in dem die Drehrichtung des ersten Förderantriebs in der ersten Steuerungseinheit abgespeichert wird und die Drehrichtung des zweiten Förderantriebs in der zweiten Steuerungseinheit abgespeichert wird. Danach endet das Verfahren im Schritt 628. Wird im Prüfschritt 640 die zweite Sensoreinheit nicht innerhalb einer ersten Zeitdauer aktiviert, so wird der Schritt 626 ausgeführt. Im Schritt 626 wird eine Fehlermeldung generiert, da das Verfahren keine Kombination von Drehrichtungen ermitteln konnte, die das Objekt derart befördern, dass die erste und die zweite Steuerungseinheit innerhalb einer ersten Zeitdauer durch das Objekt aktiviert werden. Nach dem Schritt 626 folgt der Schritt 628 mit dem das Verfahren beendet wird.

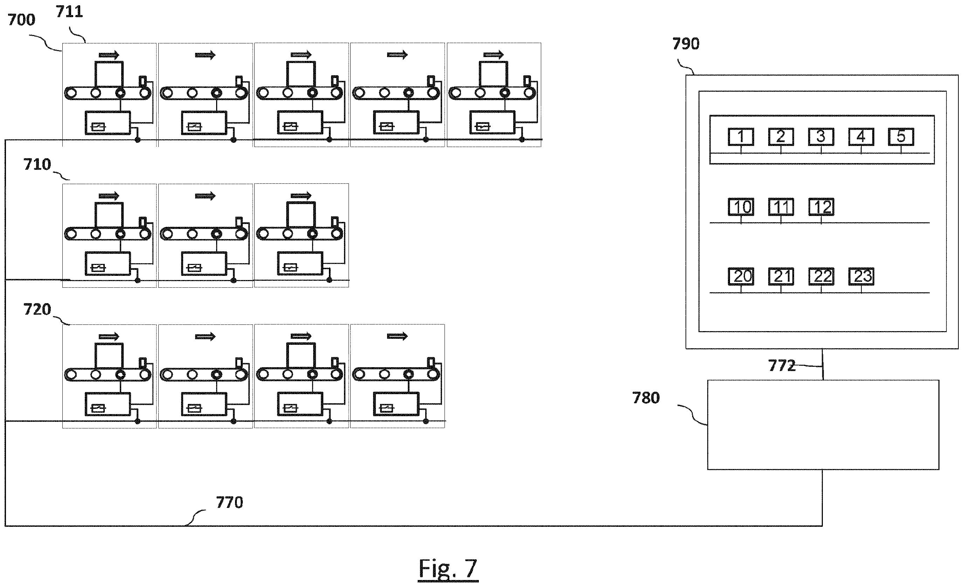

Fig. 7 beschreibt beispielhaft eine schematische Darstellung der Visualisierung der Nachbarschaftsbeziehungen. Die Förderstrecken 700, 710 und 720 bestehen aus einer unterschiedlichen Anzahl von Fördersegmenten. Die Steuerungseinheiten aller Fördersegmente sind in eine Buskommunikation 770 eingebunden. Weiterhin ist eine zentrale Verarbeitungseinheit 780 in die Buskommunikation eingebunden. Diese zentrale Verarbeitungseinheit kann mittels der Buskommunikation die Adressen aus den Steuerungseinheiten auslesen und die Nachbarschaftbeziehungen ermitteln. Die zentrale Verarbeitungseinheit ist mittels einer elektrischen Verbindung 772 signaltechnisch mit einer optischen Ausgabeeinheit 790 verbunden. Mittels dieser Ausgabeeinheit 790 werden die Nachbarschaftsbeziehungen visualisiert. Hierbei kann eine aus der Steuerungseinheit des Fördersegments 701 ausgelesene individuelle Busadresse auf der optischen Ausgabeeinheit in Form einer geeigneten Darstellungsform 711 angezeigt werden. Dies kann analog für alle weiteren Fördersegmente erfolgen. Eine Darstellung der Zugehörigkeit der Fördersegmente zu einer Förderstrecke, z. B. 700 kann mittels der Subadresse einer Steuerungseinheit erfolgen und in einer geeigneten Darstellungsform der Subadressen 712 auf der optischen Ausgabeeinheit angezeigt werden.

## Patentansprüche

1. Verfahren zum Einrichten einer Steuerungseinheit in einer Fördervorrichtung, wobei eine erste Steuerungseinheit ein stromaufwärtsliegendes erstes Fördersegment steuert und eine zweite Steuerungseinheit ein stromabwärtsliegendes zweites Fördersegment steuert
wobei das erste Fördersegment
a. einen ersten Förderantrieb zum Fördern eines Objekts durch das erste Fördersegment, und
b. eine erste Sensoreinheit zum Erfassen eines Objekts an einer Position innerhalb des ersten Fördersegments,
umfasst,
und das zweite Fördersegment
a. einen zweiten Förderantrieb zum Fördern eines Objekts durch das zweite Fördersegment, und
b. eine zweite Sensoreinheit zum Erfassen eines Objekts an einer Position innerhalb des zweiten Fördersegments,
umfasst, und
der erste Förderantrieb und die erste Sensoreinheit signaltechnisch mit der ersten Steuerungseinheit gekoppelt sind, um den ersten Förderantrieb zu steuern und um ein erstes Sensorsignal von der ersten Sensoreinheit zu empfangen und
der zweite Förderantrieb und die zweite Sensoreinheit signaltechnisch mit der zweiten Steuerungseinheit gekoppelt sind, um den zweiten Förderantrieb zu steuern und um ein zweites Sensorsignal von der zweiten Sensoreinheit zu empfangen,
**dadurch gekennzeichnet, dass** die erste und die zweite Steuerungseinheit signaltechnisch mittels einer Buskommunikation miteinander gekoppelt sind, mit den Schritten:
i) Aufsetzen eines Objektes auf das erste Fördersegment,
ii) Aktivieren eines Lernmodus an der ersten und zweiten Steuerungseinheit,
iii) Aktivieren des ersten und zweiten Förderantriebs durch die entsprechend erste und zweite Steuerungseinheit,
iv) automatisches Fördern des Objektes in Richtung des zweiten Fördersegmentes,
v) Abspeichern eines Installationsparameters in der zweiten Steuerungseinheit in Abhängigkeit der Auslösung des ersten und/oder zweiten Sensorsignals.
wobei im Schritt v) die folgenden Schritte durchgeführt werden:
- Generieren einer Übergabenachricht mit einer Busadressinformation in der ersten Steuerungseinheit,
- Übermitteln der Übergabenachricht mittels der Buskommunikation von der ersten an die zweite Steuerungseinheit,
- Zuweisen einer aus der Busadressinformation abgeleiteten individuellen Busadresse zu der zweiten Steuerungseinheit mittels Abspeichern der individuellen Busadresse als Installationsparameter in der zweiten Steuerungseinheit, wenn ein zweites Sensorsignal durch das Objekt ausgelöst wird, wobei die Busadresse der zweiten Steuerungseinheit zugeordnet wird und eine Adressierung der zweiten Steuerungseinheit ermöglicht.

2. Verfahren nach Anspruch 1, **dadurch gekennzeichnet, dass** im Schritt iv) eine Erkennung einer bevorzugten Drehrichtung des ersten und/oder des zweiten Förderantriebs, die das Objekt stromabwärts befördert, durchgeführt wird, mit den Schritten:
a. Fördern des Objektes,
b. Auslösen des ersten und/oder des zweiten Sensorsignals durch das Objekt,
c. Erfassen der Auslösung des ersten und/oder zweiten Sensorsignals durch die erste Steuerungseinheit,
d. gegebenenfalls Umkehren der Drehrichtung des ersten und/oder zweiten Förderantriebs in Abhängigkeit des ersten und/oder zweiten Sensorsignals,
e. Abspeichern einer ersten oder zweiten Drehrichtung des ersten Förderantriebs in der ersten Steuerungseinheit als Stromabwärts-Drehrichtung.

3. Verfahren nach Anspruch 2,
**dadurch gekennzeichnet, dass** die Umkehr der Drehrichtung des ersten und/oder zweiten Förderantriebs durch Ausbleiben des ersten und/oder des zweiten Sensorsignals erfolgt.

4. Verfahren nach Anspruch 2,
**dadurch gekennzeichnet, dass** die Umkehr der Drehrichtung des ersten und/oder zweiten Förderantriebs in Abhängigkeit des Ausbleibens des ersten und/oder des zweiten Sensorsignals innerhalb einer vorbestimmten Zeitspanne nach Aktivieren des ersten Förderantriebs erfolgt.

5. Verfahren nach Anspruch 2,
**dadurch gekennzeichnet, dass** die Umkehr der Drehrichtung des ersten und/oder zweiten Förderantriebs durch Auslösen des ersten und/oder des zweiten Sensorsignals erfolgt.

6. Verfahren nach Anspruch 2,
**dadurch gekennzeichnet, dass** die Umkehr der Drehrichtung des ersten Förderantriebs anhand des ersten Sensorsignals ausgelöst wird, und die Umkehr der Drehrichtung des zweiten Förderantriebs anhand des zweiten Sensorsignals ausgelöst wird.

7. Verfahren nach einem der Ansprüche 2-6,
**dadurch gekennzeichnet, dass** bei Auslösen des ersten Sensorsignals und hierauf folgendem Auslösen des zweiten Sensorsignals innerhalb einer ersten Zeitdauer nach Auslösen des ersten Sensorsignals, die Drehrichtung des ersten Förderantriebes in der ersten Steuerungseinheit als Stromabwärts-Drehrichtung abgespeichert wird und die Drehrichtung des zweiten Förderantriebes in der zweiten Steuerungseinheit als Stromabwärts-Drehrichtung abgespeichert wird.

8. Verfahren nach einem der Ansprüche 2-7,
**dadurch gekennzeichnet, dass** nach einer vorbestimmten Anzahl von Umkehrungen der Drehrichtung der Lernmodus beendet wird, insbesondere, dass nach vier Umkehrungen der Drehrichtung der Lernmodus beendet wird.

9. Verfahren nach einem der Ansprüche 2-8,
**dadurch gekennzeichnet, dass** durch Aktivieren des ersten und des zweiten Förderantriebs, vorzugsweise durch Aktivieren aller Förderantriebe, insbesondere durch Aktivieren aller Förderantriebe mit Ausnahme der Förderantriebe, die an eine Steuerungseinheit angeschlossen sind, in der bereits eine Busadresse gespeichert wurde, das Objekt befördert wird.

10. Verfahren nach Anspruch 1
**dadurch gekennzeichnet, dass** eine zentrale Verarbeitungseinheit mittels einer Buskommunikation Daten mit der ersten und zweiten Steuerungseinheit austauschen kann, und die zentrale Verarbeitungseinheit die folgenden Schritte ausführt:
i) Auslesen von individuellen Busadressen aus den Steuerungseinheiten mittels der Buskommunikation,
ii) Ermitteln von Nachbarschaftsbeziehungen der Steuerungseinheiten anhand der Abfolge der individuellen Busadressen,
iii) Abspeichern der Nachbarschaftsbeziehungen in der zentralen Verarbeitungseinheit,
iv) Visualisieren der Nachbarschaftsbeziehungen durch eine grafische Benutzerschnittstelle.

11. Verfahren nach einem der vorherigen Ansprüche,
**dadurch gekennzeichnet, dass** die zweite Steuerungseinheit
- eine erste Programmeinheit, die signaltechnisch mit dem zweiten Förderantrieb und der zweiten Sensoreinheit des zweiten Fördersegments gekoppelt ist, und
- eine zweite Programmeinheit, die signaltechnisch mit einem dritten Förderantrieb und einer dritten Sensoreinheit eines dritten Fördersegments gekoppelt ist, umfasst
- und dass die erste und zweite Programmeinheit innerhalb der zweiten Steuerungseinheit signaltechnisch gekoppelt sind, insbesondere, dass die erste und zweite Programmeinheit innerhalb der Steuerungseinheit mit einem gemeinsamen elektrischen Speicher signaltechnisch gekoppelt sind, und
dass die erste und zweite Programmeinheit innerhalb einer Steuerungseinheit die Erkennung der Drehrichtung des zweiten und dritten Förderantriebes, die das Objekt stromabwärts befördert, nach einem der Ansprüche 3-10 durchführen, wobei die erste bzw. die zweite Programmeinheit an die Stelle der ersten bzw. zweiten Steuerungseinheit tritt, und die Kommunikation der Programmeinheiten mittels der signaltechnischen Kopplung innerhalb der Steuerungseinheit erfolgt.

12. Verfahren nach einem der vorhergehenden Ansprüche,
**dadurch gekennzeichnet, dass** die erste Steuerungseinheit in den Lernmodus versetzt wird, durch
- Auslösen eines Schalters, insbesondere durch Auslösen eines Reed-Kontakts oder eines Hallsensors mit einem Magnetsignal oder,
- Empfangen eines Kommandos in der ersten Steuerungseinheit mittels der Buskommunikation.

13. Verfahren nach Anspruch 1,
**dadurch gekennzeichnet, dass** eine individuelle Busadresse der ersten Steuerungseinheit
- zuvor manuell durch den Anwender in Form einer Ziffernfolge festgelegt wurde oder
- durch eine vorkonfigurierte Ursprungsnummer definiert wurde.

14. Verfahren nach einem der vorhergehenden Ansprüche,
**dadurch gekennzeichnet, dass** einer Steuerungseinheit ein individueller Klartextname zugewiesen wird, insbesondere, dass der ersten Steuerungseinheit ein Klartextname zugewiesen wird, der zuvor manuell durch den Anwender in Form einer Buchstabenfolge und/oder Ziffernfolge festgelegt wurde oder durch eine vorkonfigurierten Ursprungsklartextnamen definiert wurde.

15. Verfahren nach einem der vorhergehenden Ansprüche,
**dadurch gekennzeichnet, dass** eine Mehrzahl von Steuerungseinheiten über eine Subadresse simultan mittels der Buskommunikation adressiert wird, insbesondere, dass simultan eine Mehrzahl von Steuerungseinheiten in den Lernmodus versetzt werden, die eine identische Subadresse besitzen, wobei die Subadresse
- zuvor manuell durch den Anwender in Form einer Ziffernfolge festgelegt wurde oder
- durch eine vorkonfigurierte Ursprungsnummer definiert wurde.

16. Verfahren nach einem der vorhergehenden Ansprüche,
**dadurch gekennzeichnet, dass** in einem Parametrierschritt dem ersten Fördersegment Förderparameter zugewiesen werden, indem entsprechende Förderparameter in der ersten Steuerungseinheit abgespeichert werden, und vorzugsweise nach Auslösen des zweiten Sensorsignals durch das Objekt, die Förderparameter der ersten Steuerungseinheit in der zweiten Steuerungseinheit abgespeichert werden.

17. Verfahren nach einem der vorhergehenden Ansprüche,
**dadurch gekennzeichnet, dass** eine Steuerungseinheit
- das Beenden des Lernmodus und/oder
- die fehlerhafte Erkennung der Drehrichtung
visuell und/oder akustisch signalisiert, indem die Steuerungseinheit des Fördersegments
- optische Signale aussendet, die durch lichtemittierende Bauteile der Steuerungseinheit des Fördersegments erzeugt werden und/oder
- ein vorbestimmtes Muster einer Sequenz aus Aktivieren und Deaktivieren des Förderantriebs des Fördersegments steuert und/oder
- einen elektroakustischen Schallwandler aktiviert, der in die Steuerungseinheit integriert ist.

## Claims

1. A method for setting up a control unit in a conveying device, wherein a first control unit controls an upstream first conveyor segment and a second control unit controls a downstream second conveyor segment,
said first conveyor segment comprising
a. a first conveyor drive for conveying an object through the first conveyor segment and
b. a first sensor unit for detecting an object at a position within the first conveyor segment,
and said second conveyor segment comprising
a. a second conveyor drive for conveying an object through the second conveyor segment and
b. a second sensor unit for detecting an object at a position within the second conveyor segment,
and wherein
the first conveyor drive and the first sensor unit are in signal communication with the first control unit in order to control the first conveyor drive and to receive a first sensor signal from the first sensor unit, and
the second conveyor drive and the second sensor unit are in signal communication with the second control unit in order to control the second conveyor drive and to receive a second sensor signal from the second sensor unit,
wherein the first and the second control unit are in signal communication with each other via bus communication, said method comprising the following steps:
i) placing an object onto the first conveyor segment,
ii) activating a learning mode in the first and second control unit,
iii) activating the first and second conveyor drive by means of the respective first and second control unit,
iv) automatically conveying the object in the direction of the second conveyor segment,
v) storing an installation parameter in the second control unit depending on the triggering of the first and/or second sensor signal.
wherein the following steps are carried out in step v):
- generating in the first control unit a delivery message containing bus address information,
- sending the delivery message from the first to the second control unit by means of the bus communication,
**characterized in that** the following step is carried out in step v):
- assigning an individual bus address derived from the bus address information to the second control unit by storing the individual bus address as an installation parameter in the second control unit when a second sensor signal is triggered by the object.

2. The method according to claim 1, **characterized in that** a preferred direction of rotation of the first and/or second conveyor drive such that the object is conveyed downstream is detected in step iv), said detection comprising the following steps:
a. conveying the object,
b. triggering of the first and/or second sensor signal by the object,
c. detecting by means of the first control unit that the first and/or second sensor signal has been triggered,
d. if necessary, reversing the direction of rotation of the first and/or second conveyor drive, depending on the first and/or second sensor signal,
e. storing in the first control unit a first or second direction of rotation of the first conveyor drive as a downstream direction of rotation.

3. The method according to claim 2,
**characterized in that** the direction of rotation of the first and/or second conveyor drive is reversed when the first and/or second sensor signal fails to appear.

4. The method according to claim 3,
**characterized in that** the direction of rotation of the first and/or second conveyor drive is reversed depending on the first and/or second sensor signal failing to appear within a predetermined period after activation of the first conveyor drive.

5. The method according to claim 2,
**characterized in that** the direction of rotation of the first and/or second conveyor drive is reversed by triggering of the first and/or second sensor signal.

6. The method according to claim 2,
**characterized in that** reversal of the direction of rotation of the first conveyor drive is triggered on the basis of the first sensor signal, and reversal of the direction of rotation of the second conveyor drive is triggered on the basis of the second sensor signal.

7. The method according to any one of claims 2 to 6,
**characterized in that** the direction of rotation of the first conveyor drive is stored as a downstream direction of rotation in the first control unit and the direction of rotation of the second conveyor drive is stored as a downstream direction of rotation in the second control unit when the first sensor signal is triggered and is subsequently followed by the second sensor signal being triggered within a first period of time after triggering of the first sensor signal.

8. The method according to any one of claims 2 to 7,
**characterized in that** the learning mode is terminated after a predetermined number of reversals of the direction of rotation, in particular that the learning mode is terminated after four reversals of the direction of rotation.

9. The method according to any one of claims 2 to 8,
**characterized in that** the object is conveyed by activating the first and the second conveyor drive, preferably by activating all the conveyor drives, in particular by activating all the conveyor drives that are connected to a control unit in which a bus address has already been stored.

10. The method according to claim 1,
**characterized in that** a central processing unit can exchange data with the first and second control unit via bus communication, and the central processing unit performs the following steps:
i) fetching individual bus addresses from the control units via bus communication,
ii) determining neighbourhood relationships of the control units on the basis of the sequence of individual bus addresses,
iii) storing the neighbourhood relationships in the central processing unit,
iv) visualising the neighbourhood relationships by means of a graphical user interface.

11. The method according to any one of the preceding claims,
**characterized in that** the second control unit comprises
- a first program unit which is in signal communication with the second conveyor drive and the second sensor unit of the second conveyor segment, and
- a second program unit which is in signal communication with the third conveyor drive and a third sensor unit of a third conveyor segment,
- and **in that** the first and second program units are in signal communication inside the second control unit, in particular **in that** the first and second program units are in signal communication with a common electric store, and
**in that** the first and second program units inside a control unit detect, in accordance with claims 3 to 10, the direction of rotation of the second and third conveyor drive which conveys the object downstream, wherein the first and second program units replace the first and second control units, respectively, and the program units communicate via signal communication inside the control unit.

12. The method according to any one of the preceding claims,
**characterized in that** the first control unit is put into the learning mode by
- triggering a switch, in particular by triggering a Reed contact or a Hall sensor with a magnetic signal, or
- receiving a command in the first control unit via bus communication.

13. The method according to claim 1,
**characterized in that** an individual bus address of the first control unit
- is manually defined in the form of a digit sequence by the user beforehand, or
- was defined by a preconfigured original number.

14. The method according to any one of the preceding claims,
**characterized in that** a control unit is assigned an individual plaintext name, in particular **in that** the first control unit is assigned an individual plaintext name which was manually defined in the form of a character string and/or a digit string by the user beforehand, or was predefined by a preconfigured original plaintext name.

15. The method according to any one of the preceding claims,
**characterized in that** a plurality of control units is addressed simultaneously via bus communication using one sub-address, in particular **in that** a plurality of control units having an identical sub-address is put into the learning mode simultaneously, wherein the sub-address
- is manually defined in the form of a digit sequence by the user beforehand, or
- was defined by a preconfigured original number.

16. The method according to any one of the preceding claims,
**characterized in that** conveying parameters are assigned to the first conveyor segment in a first parameterising step, **in that** respective conveying parameters are stored in the first control unit, and preferably that the conveying parameters of the first control unit are stored in the second control unit after the second sensor signal is triggered by the object.

17. The method according to any one of the preceding claims,
**characterized in that** the second control unit signals
- termination of the learning mode and/or
- incorrect detection of the direction of rotation visually and/or acoustically, **in that** the control unit of the conveyor segment
- emits optical signals which are generated by light-emitting components of the control unit of the conveyor segment and/or
- controls a predetermined sequential pattern of activating and deactivating the conveyor drive of the conveyor segment and/or
- activates an electroacoustic sound transducer which is integrated in the control unit.

## Revendications

1. Procédé d'installation d'une unité de commande dans un dispositif de convoyage, dans lequel une première unité de commande commande un premier segment de convoyage se trouvant en amont et une seconde unité de commande commande un deuxième segment de convoyage se trouvant en aval,
dans lequel le premier segment de convoyage comporte
a. un premier entraînement de convoyage pour le convoyage d'un objet par le premier segment de convoyage, et
b. une première unité de capteur pour la détection d'un objet au niveau d'une position à l'intérieur du premier segment de convoyage,
et le deuxième segment de convoyage comporte
a. un deuxième entraînement de convoyage pour le convoyage d'un objet par le deuxième segment de convoyage, et
b. une deuxième unité de capteur pour la détection d'un objet au niveau d'une position à l'intérieur du deuxième segment de convoyage, et
le premier entraînement de convoyage et la première unité de capteur sont couplés en signal à la première unité de commande afin de commander le premier entraînement de convoyage et afin de recevoir un premier signal de capteur de la première unité de capteur et
le deuxième entraînement de convoyage et la deuxième unité de capteur sont couplés en signal à la seconde unité de commande afin de commander le deuxième entraînement de convoyage et afin de recevoir un second signal de capteur de la deuxième unité de capteur,
dans lequel la première et la seconde unité de commande sont couplées en signal entre elles au moyen d'une communication bus, avec les étapes :
i) de placement d'un objet sur le premier segment de convoyage,
ii) d'activation d'un mode d'apprentissage au niveau de la première et de la seconde unité de commande,
iii) d'activation du premier et deuxième entraînement de convoyage par la première et la seconde unité de commande correspondantes,
iv) de convoyage automatique de l'objet en direction du deuxième segment de convoyage,
v) d'enregistrement d'un paramètre d'installation dans la seconde unité de commande en fonction du déclenchement du premier et/ou second signal de capteur,
dans lequel à l'étape v) les étapes suivantes sont réalisées :
- la génération d'un message de remise avec une information d'adresse bus dans la première unité de commande,
- la transmission du message de remise au moyen de la communication bus de la première à la seconde unité de commande, **caractérisé en ce qu'**à l'étape v) l'étape suivante est réalisée :
- l'attribution d'une adresse bus individuelle dérivée de l'information d'adresse bus à la seconde unité de commande au moyen de l'enregistrement de l'adresse bus individuelle comme paramètre d'installation dans la seconde unité de commande lorsqu'un second signal de capteur est déclenché par l'objet, dans lequel l'adresse bus est associée à la seconde unité de commande et permet un adressage de la seconde unité de commande.

2. Procédé selon la revendication 1, **caractérisé en ce qu'**à l'étape iv) une reconnaissance d'un sens de rotation préféré du premier et/ou du deuxième entraînement de convoyage qui convoie l'objet en aval, est réalisée, avec les étapes :
a. de convoyage de l'objet,
b. de déclenchement du premier et/ou du second signal de capteur par l'objet,
c. de détection du déclenchement du premier et/ou second signal de capteur par la première unité de commande,
d. d'inversion éventuelle du sens de rotation du premier et/ou deuxième entraînement de convoyage en fonction du premier et/ou second signal de capteur,
e. d'enregistrement d'un premier ou second sens de rotation du premier entraînement de convoyage dans la première unité de commande comme sens de rotation en aval.

3. Procédé selon la revendication 2,
**caractérisé en ce que** l'inversion du sens de rotation du premier et/ou deuxième entraînement de convoyage est effectuée par l'absence du premier et/ou du second signal de capteur.

4. Procédé selon la revendication 3,
**caractérisé en ce que** l'inversion du sens de rotation du premier et/ou deuxième entraînement de convoyage est effectuée en fonction de l'absence du premier et/ou du second signal de capteur dans un intervalle prédéterminé après l'activation du premier entraînement de convoyage.

5. Procédé selon la revendication 2,
**caractérisé en ce que** l'inversion du sens de rotation du premier et/ou deuxième entraînement de convoyage est effectuée par déclenchement du premier et/ou du second signal de capteur.

6. Procédé selon la revendication 2,
**caractérisé en ce que** l'inversion du sens de rotation du premier entraînement de convoyage est déclenchée au moyen du premier signal de capteur, et l'inversion du sens de rotation du deuxième entraînement de convoyage est déclenchée au moyen du second signal de capteur.

7. Procédé selon l'une des revendications 2 à 6,
**caractérisé en ce que**, lors du déclenchement du premier signal de capteur et du déclenchement consécutif du second signal de capteur dans une première période après déclenchement du premier signal de capteur, le sens de rotation du premier entraînement de convoyage dans la première unité de commande est enregistré comme sens de rotation en aval et le sens de rotation du deuxième entraînement de convoyage dans la seconde unité de commande est enregistrée comme sens de rotation en aval.

8. Procédé selon l'une des revendications 2 à 7,
**caractérisé en ce qu'**après un nombre prédéterminé d'inversions du sens de rotation le mode d'apprentissage est terminé, en particulier qu'après quatre inversions du sens de rotation le mode d'apprentissage est terminé.

9. Procédé selon l'une des revendications 2 à 8,
**caractérisé en ce que** par l'activation du premier et du deuxième entraînement de convoyage, de préférence par activation de tous les entraînements de convoyage, en particulier par activation de tous les entraînements de convoyage à l'exception des entraînements de convoyage qui sont raccordés à une unité de commande, dans laquelle une adresse bus a déjà été enregistrée, l'objet est convoyé.

10. Procédé selon la revendication 1,
**caractérisé en ce qu'**une unité de traitement centrale peut échanger au moyen de la communication bus des données avec la première et la seconde unité de commande, et l'unité de traitement centrale réalise les étapes suivantes :
i) de lecture d'adresses bus individuelles à partir des unités de commande au moyen de la communication bus,
ii) de détermination de rapports de voisinage des unités de commande au moyen de la suite des adresses bus individuelles,
iii) d'enregistrement des rapports de voisinage dans l'unité de traitement centrale,
iv) de visualisation des rapports de voisinage par une interface utilisateur graphique.

11. Procédé selon l'une des revendications précédentes,
**caractérisé en ce que** la seconde unité de commande comporte
- une première unité de programme qui est couplée en signal au deuxième entraînement de convoyage et à la deuxième unité de capteur du deuxième segment de convoyage, et
- une seconde unité de programme qui est couplée en signal à un troisième entraînement de convoyage et à une troisième unité de capteur d'un troisième segment de convoyage,
- et que la première et la seconde unité de programme sont couplées en signal à l'intérieur de la seconde unité de commande, en particulier que la première et la seconde unité de programme sont couplées en signal à l'intérieur de l'unité de commande à un accumulateur électrique commun, et
que la première et la seconde unité de commande réalisent à l'intérieur d'une unité de commande la reconnaissance du sens de rotation du deuxième et troisième entraînement de convoyage qui convoie l'objet en aval, selon l'une des revendication 3 à 10, dans lequel la première ou la seconde unité de programme entre à la place de la première ou seconde unité de commande, et la communication des unités de programme est effectuée au moyen du couplage en signal à l'intérieur de l'unité de commande.

12. Procédé selon l'une des revendications précédentes,
**caractérisé en ce que** la première unité de commande est amenée dans le mode d'apprentissage, par
- le déclenchement d'un commutateur, en particulier par déclenchement d'un contact Reed ou d'un capteur à effet Hall avec un signal magnétique ou,
- la réception d'une commande dans la première unité de commande au moyen de la communication bus.

13. Procédé selon la revendication 1,
**caractérisé en ce qu'**une adresse bus individuelle de la première unité de commande
- a été fixée auparavant manuellement par l'utilisateur sous la forme d'une suite de chiffres ou
- a été définie par un numéro d'origine préconfiguré.

14. Procédé selon l'une des revendications précédentes,
**caractérisé en ce qu'**un nom de texte en clair individuel est attribué à une unité de commande, en particulier qu'un nom de texte en clair est attribué à la première unité de commande, qui a été fixé auparavant manuellement par l'utilisateur sous la forme d'une suite de lettres et/ou suite de chiffres ou a été défini par un nom de texte en clair d'origine préconfiguré.

15. Procédé selon l'une des revendications précédentes,
**caractérisé en ce qu'**une pluralité d'unités de commande est adressée par une sous-adresse simultanément au moyen de la communication bus, en particulier que simultanément une pluralité d'unités de commande est amenée dans le mode d'apprentissage, qui possèdent une sous-adresse identique, dans lequel la sous-adresse
- a été fixée auparavant manuellement par l'utilisateur sous la forme d'une suite de chiffres ou
- a été définie par un numéro d'origine préconfiguré.

16. Procédé selon l'une des revendications précédentes,
**caractérisé en ce que** dans une étape de paramétrage des paramètres de convoyage sont attribués au premier segment de convoyage **en ce que** des paramètres de convoyage correspondants sont enregistrés dans la première unité de commande, et de préférence après déclenchement du second signal de capteur par l'objet les paramètres de convoyage de la première unité de commande sont enregistrés dans la seconde unité de commande.

17. Procédé selon l'une des revendications précédentes,
**caractérisé en ce qu'**une unité de commande signale visuellement et/ou acoustiquement
- la fin du mode d'apprentissage et/ou
- la reconnaissance défectueuse du sens de rotation **en ce que** l'unité de commande du segment de convoyage
- émet des signaux optiques qui sont générés par des composants émettant de la lumière de l'unité de commande du segment de convoyage et/ou
- commande un modèle prédéterminé d'une séquence d'activation et de désactivation de l'entraînement de convoyage du segment de convoyage et/ou
- active un convertisseur électroacoustique qui est intégré dans l'unité de commande.
